# EUROPÄISCHE PATENTSCHRIFT

(11) **EP 4 183 842 B1**
(45) Veröffentlichungstag und Bekanntmachung des Hinweises auf die Patenterteilung: **07.10.2026**
(21) Anmeldenummer: 21209836.2
(22) Anmeldetag: 23.11.2021
(51) Int. Cl.: C09D 5/00

(54) **PIGMENTPASTE UND IHRE VERWENDUNG**
PIGMENT PASTE AND ITS USE
PÂTE PIGMENTAIRE ET SON UTILISATION

(43) Veröffentlichungstag der Anmeldung: 24.05.2023
(73) Patentinhaber: EWALD DÖRKEN AG, 58313 Herdecke (DE)
(72) Erfinder: ROTH, Marcel, 58313 Herdecke (DE); MIRI, Daniel, 58313 Herdecke (DE); KONN, Irina, 58313 Herdecke (DE); SCHMITZ, Justine, 58313 Herdecke (DE); MATTHÉE, Peter, 58313 Herdecke (DE); ZIMNY, Torsten, 58313 Herdecke (DE); LISCHEID, Jan, 58313 Herdecke (DE); KRUPP, Marc, 58313 Herdecke (DE)
(74) Vertreter: Freiherr von Foullon, Alexander

(56) Entgegenhaltungen:
- WO-A1-2012/147693
- DE-B- 1 234 895
- JP-A- 2007 023 443

## Beschreibung

Die vorliegende Erfindung betrifft das technische Gebiet der Oberflächenbeschichtung.

Insbesondere betrifft die vorliegende Erfindung eine wässrige Zusammensetzung, insbesondere eine Pigmentpaste, zur Einarbeitung in Farben und Lacke.

Weiterhin betriff die vorliegende Erfindung die Verwendung einer Pigmentpaste in Oberflächenbeschichtungssystemen, insbesondere Anstrichmitteln.

Weiterhin betrifft die vorliegende Erfindung ein Kit-of-Parts zur Herstellung eines Anstrichmittels.

Moderne Beschichtungssysteme, insbesondere Anstrichmittel, werden zunehmend auf Wasserbasis formuliert, da sie nach Möglichkeit frei von flüchtigen organischen Verbindungen, d.h. VOC-frei (volatile organic compound), sein sollen. Derartige VOC-freie Anstrichmittelsysteme bzw. Systeme mit einem Gehalt von weniger als 1 g/l an VOC gelten als lösemittel- und emissionsfrei. Sie sind unter Gesichtspunkten des Umwelt- und Gesundheitsschutzes nicht bzw. zumindest weniger problematisch als lösemittelbasierte Systeme.

Darüber hinaus gibt es Bestrebungen, den Einsatz von Konservierungsmitteln und Bioziden in Anstrichmitteln zu vermeiden, zumindest jedoch zu reduzieren. Wenn die Anstrichmittelsysteme keine Konservierungsmittel oder Biozide enthalten, müssen in der Regel keine Gefahrenstoffe ausgewiesen werden und die Anstrichmittel sind arbeitsschutztechnisch problemlos und ohne besondere Sicherheitsvorkehrungen anwend- und verarbeitbar.

Die Verwendung wässriger Systeme, insbesondere in Kombination mit organischen Bindemittelsystemen, führt in der Praxis regelmäßig zu einem raschen Befall der Anstrichmittel mit Keimen, insbesondere mit Bakterien, Hefen oder auch mit Schimmel, so dass den Anstrichmitteln in der Regel Konservierungsmittel und/oder Biozide beigemischt werden müssen. Dies gilt speziell für wässrige Pigmentpasten, wie sie insbesondere für Abtönsysteme eingesetzt werden. Um eine Vielzahl unterschiedlicher Farben und Farbschattierungen bereitzustellen, welche von Kunden individuell ausgewählt und zusammengestellt werden können, werden in der Regel Abtönsysteme verwendet. Abtönsysteme bestehen üblicherweise aus einer Palette von farbigen Pigmentpasten, welche mit einem Bindemittel bzw. einer Bindemittelmischung, der sogenannten Abtönbasis oder Basiszusammensetzung, gemischt werden, um Anstrichmittel, insbesondere Wandfarben, mit einem gewünschten Farbton zu erhalten. Bei den Pigmentpasten handelt es sich dabei um hochkonzentrierte pigmenthaltige Dispersionen. Die Pigmentpaste und die Base bzw. Abtönbasis ergeben zusammen dann die anwendungsfertige Farbe bzw. das anwendungsfertige Anstrichmittel.

Das Vermischen einzelner Pigmentpasten in variierenden Mengen mit der Abtönbasis erfolgt in Maschinen, in welchen der Mischvorgang softwareunterstützt durchgeführt wird. Die Pigmentpasten werden dabei mehrere Wochen, nachdem sie aus dem Originalgebinde entnommen wurden, mehr oder weniger offen gelagert und sind in dieser Zeit über die Umgebungsluft Keimen, insbesondere Bakterien, Hefen und Schimmelsporen, ausgesetzt, was bei lösemittelfreien bzw. wasserbasierten Systemen nahezu zwangsläufig zu einem Befall mit Bakterien, Hefen oder Schimmel führt.

Aus diesem Grund werden in wässrigen Pigmentpasten und Abtönsysteme nahezu ausschließlich Konservierungsmittel und Biozide eingesetzt. Der Einsatz von Bioziden und Konservierungsmitteln ist jedoch aus einer Vielzahl von Gründen nachteilig, da Biozide und Konservierungsmittel in der Regel auch sowohl für den Gesundheitsschutz als auch für den Umweltschutz problematische Substanzen darstellen, deren Verwendung minimiert werden sollte und deren Einsatz durch eine verschärftere Chemikaliengesetzgebung stets strenger reglementiert wird. Darüber hinaus ist ein gravierender Nachteil herkömmlicher organischer Biozide deren Dampfdruck: die Biozide gehen in die Gasphase über und können z.B. Allergien auslösen, wobei insbesondere auch die Gefahr einer Anreicherung der Biozide in der Luft von Innenräumen besteht. Weiterhin sind organische Biozide üblicherweise nicht langzeitstabil und werden z. B. durch UV-Strahlung zersetzt.

Es gibt daher Versuche, auch wässrige Pigmentpasten, insbesondere für Abtönsysteme, ohne Konservierungsmittel oder Biozide bereitzustellen. Hierzu wird üblicherweise der pH-Wert der Pigmentpaste auf einen Wert von 10 oder höher eingestellt, wodurch ein Milieu geschaffen wird, in welchem viele Bakterien und Hefen sowie auch die Mehrzahl der Pilze nicht wachsen kann.

Es zeigt sich jedoch bei zunehmendem Einsatz dieser Systeme, dass es eine große Anzahl von alkaliphilen Bakterien, Hefen und Pilzen, insbesondere Schimmelpilzen, existiert, die entweder unter diesen alkalischen Bedingungen gut wachsen oder sich mit Erfolg an diese Bedingungen anpassen können. Um diese alkaliphilen Keime dann zu bekämpfen müssen wiederum Konservierungsmittel und Biozide eingesetzt werden.

Die WO 2012/147693 A1 betrifft eine farbige Beschichtungszusammensetzung, bestehend aus einer farbige Partikel enthaltenden Komponente, welche ein Färbemittel und ein wässriges Harz mit Carboxylgruppen und einer weiteren verknüpften funktionellen Gruppe aufweist, sowie einer beschichtungsbildenden Komponente, welche ein wässriges Harz mit einer Carboxylgruppe, einer hydrolysierbaren Silylgruppe und einer weiteren verknüpften funktionellen Gruppe aufweist. Die beschichtungsbildende Komponente beinhaltet einen spezifischen Gehalt an polyvalentem Metall, wodurch eine wässrige farbige Beschichtungszusammensetzung erhalten werden kann, in welcher die farbigen Partikel nicht der Gefahr ausgesetzt sind, durch Sprühanwendungen oder Rollauftrag zerstört zu werden, und welche vielfarbig ausgestaltet sein kann mit exzellenter Klarheit, hervorragender Haftung an Kleidung und welche mehrfarbige Beschichtungen mit hervorragender Langzeitwitterungsbeständigkeit bereitstellen kann.

Die JP 2007-0233443 A betrifft ein beschichtetes Papier für Gravurdrucke. Das beschichtete Papier für Gravurdrucke wird bereitgestellt mit einer oder mehrerer Beschichtungslagen, welche im Wesentlichen aus einem Pigment und einem Klebstoff bestehen und auf mindestens eine Oberfläche des Papiers aufgebracht sind. Calcinierter Kaolinith, Calciumtrisulfoaluminat mit einer durchschnittlichen Partikelgröße, bestimmt nach dem Sedimentationsverfahren, in einem Bereich von 0,1 bis 1,5 µm und Kaolinith mit einer mittleren Partikelgröße ≤ 0,8 m, bestimmt nach dem Sedimentationsverfahren, sind als Pigmentkomponente in den Beschichtungslagen enthalten. Die Gehalte betragen jeweils 5 bis 20 Massenprozent, 1 bis 30 Massenprozent und ≥ 45 Massenprozent, bezogen auf den Gesamtgehalt an Pigment in der Beschichtungslage. Als Klebstoff können verschiedene organische Bindemittel verwendet werden.

Darüber hinaus ist es auch bekannt, Calciumaluminatsulfat, welches das Mineral Ettringit mit der Summenformel Ca₆Al₂[(OH)₁₂(SO₄)₃] · 26 H₂O aufweist als Weißpigment in Anstrichfarben und der Papierbeschichtung einzusetzen. Calciumaluminatsulfat wird in Form einer wässrigen basischen Suspensionen vertrieben und kann insbesondere Anstrichmitteln in geringen Mengen zugesetzt werden. Ein Verfahren zur Herstellung von Präzipitaten auf Basis von Calciumaluminatsulfat ist in der WO 97/35807 A1 beschrieben. Der Einsatz von großen Mengen an Calciumaluminatsulfat in Bindemittelsystemen ist nicht möglich, da aufgrund der relativ guten Löslichkeit in Wasser und damit vorhandenen Mengen zwei- und dreiwertiger Ionen in der Dispersion Bindemittelsysteme rasch eindicken. Insbesondere wird eine Koagulation dispergierter Bestandteile, insbesondere elektrostatisch stabilisierter Bestandteile beobachtet. Die in der Lösung vorhandenen zwei- und dreiwertigen Ionen, insbesondere Aluminiumionen, führen allerdings auch dazu, dass die wässrigen Suspensionen von Calciumaluminatsulfat einen über den basischen pH-Wert hinausgehenden keimresistenten Effekt aufweisen, d.h. dass die wässrigen Suspensionen von Calciumaluminatsulfat nur schwer von Keimen aller Art, insbesondere Bakterien, Hefen oder Schimmelpilzen, befallen bzw. besiedelt werden.

Calciumaluminatsulfat hat jedoch den weiteren Nachteil, wenig dispersionsstabil zu sein und bei Verarbeitung in Farben schnell an- bzw. auszutrocknen, d.h. die offene Zeit der Farben ist sehr gering.

Die Auslegeschrift DE 1 234 895 betrifft ein Verfahren zur Herstellung flüssiger Dispersionen von Satinweiß für Papierstreichfarben, wobei dem Satinweiß bei der Herstellung oder danach in Wasser Lösungen von niedrige Viskosität ausbildende Salze der Carboxymethylcellulose unter Rühren zugesetzt werden.

Es fehlt somit im Stand der Technik weiterhin sowohl an einem wässrig basierten Anstrichmittel als auch einer wässrig basierten Pigmentpaste, welche konservierungsmittelfrei und biozidfrei formuliert werden kann, eine lange offene Zeit besitzt und resistent gegen Befall mit Mikroorganismen, insbesondere Bakterien oder Schimmel, ist.

Eine Aufgabe der vorliegenden Erfindung ist folglich darin zu sehen, die mit dem zuvor geschilderten Stand der Technik verknüpften Nachteile zu vermeiden, zumindest jedoch abzuschwächen.

Insbesondere ist eine Aufgabe der vorliegenden Erfindung darin zu sehen, eine Pigmentpaste bereitzustellen, welche lösemittelfrei bzw. VOC- und SVOC-frei ist und die gleichzeitig frei ist von Bioziden und Konservierungsmitteln, insbesondere von flüchtigen Bioziden und Konservierungsmitteln.

Weiterhin ist eine Aufgabe der vorliegenden Erfindung darin zu sehen, eine Pigmentpaste bereitzustellen, welche auch gegenüber alkaliphilen Bakterien, Hefen und Schimmelpilzen resistent ist.

Eine weitere Aufgabe der vorliegenden Erfindung ist darin zu sehen, ein Abtönsystem bereitzustellen, welches eine einfache Abtönung einer Vielzahl wässriger Bindemittelsysteme ermöglicht. Insbesondere ist hierbei eine Aufgabe der vorliegenden Erfindung darin zu sehen, ein anorganisches, pigmentbasiertes und keimresistentes Additiv bereitzustellen, welches die Coloristik von Anstrichmitteln nicht beeinträchtigt.

Gegenstand der vorliegenden Erfindung gemäß einem ersten Aspekt der vorliegenden Erfindung ist somit eine wässrige Zusammensetzung gemäß Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung gemäß einem zweiten Aspekt der vorliegenden Erfindung ist die Verwendung einer wässrigen Zusammensetzung nach Anspruch 12.

Wiederum weiterer Gegenstand der vorliegenden Erfindung gemäß einem dritten Aspekt der vorliegenden Erfindung ist ein Kit-of-Parts gemäß Anspruch 13; weitere, vorteilhafte Ausgestaltungen dieses Erfindungsaspekts sind Gegenstand des diesbezüglichen Unteranspruchs.

Wiederum weiterer Gegenstand der vorliegenden Erfindung gemäß einem vierten Aspekt der vorliegenden Erfindung ist eine Zusammensetzung nach Anspruch 14; weitere, vorteilhafte Ausgestaltungen dieses Erfindungsaspekts sind Gegenstand der diesbezüglichen Unteransprüche.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass bei allen nachstehend genannten relativen bzw. prozentualen, insbesondere gewichtsbezogenen Mengenangaben zu beachten ist, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew.-% resultieren. Dies versteht sich für den Fachmann aber von selbst.

Zudem gilt, dass alle im Folgenden genannten Parameterangaben oder dergleichen grundsätzlich mit genormten oder explizit angegebenen Bestimmungsmethoden oder aber mit dem Fachmann an sich geläufigen Bestimmungsverfahren bestimmt bzw. ermittelt werden können.

Dies vorausgeschickt wird nachfolgend der Gegenstand der vorliegenden Erfindung näher erläutert.

Gegenstand der vorliegenden Erfindung - gemäß einem **ersten** Aspekt der vorliegenden Erfindung - ist somit eine wässrige Zusammensetzung, insbesondere Pigmentpaste für Abtönsysteme, wobei die Zusammensetzung, jeweils bezogen auf die Zusammensetzung, enthält:
(a) eine anorganische aluminiumhaltige Verbindung mit einer Löslichkeit von weniger als 5 g/l bei 20 °C in Wasser in Mengen von 2 bis 20 Gew.-%, wobei die anorganische aluminiumhaltige Verbindung ausgewählt ist aus der Gruppe von Magnesiumaluminiumphosphaten, Magnesiumaluminiumsilikaten, Calciumaluminiumphosphaten, Calciumaluminiumsilikaten, Calciumaluminat-Hydraten, Calciumaluminatsulfat und deren Mischungen,
(b) ein Netz- oder Dispergiermittel in Mengen von 1 bis 50 Gew.-% wobei das Netz- oder Dispergiermittel aus einem sauer und/oder basisch funktionalisierten Polymer, insbesondere mit polaren funktionellen Gruppen, aus der Gruppe von funktionalisierten Polyaminen, funktionalisierten Polyurethanen, funktionalisierten Poly(meth)acrylaten, funktionalisierten Vinylcopolymeren, funktionalisierten Polyether/Polyester-Copolymeren, funktionalisierten Polyethern, funktionalisierten Polyestern, funktionalisierten Fettsäurecopolymeren, funktionalisierten Blockcopolymeren und/oder funktionalisierten Polyalkoxylaten sowie Mischungen oder Kombinationen von mindestens zwei dieser Verbindungen ausgewählt ist,
(c) ein Feuchthaltemittel in Mengen von 0,1 bis 30 Gew.-%, wobei das Feuchthaltemittel aus der Gruppe von Polyethylenglykolen, Tripropylengylkol, Polypropylenglykol, Polyakylenglykol, Glycerin, Glycerinethoxylat, Polyethern, Polyurethanen und deren Mischungen ausgewählt ist, und
(d) ein Pigment in Mengen von 5 bis 85 Gew.-%.

Denn, wie die Anmelderin überraschenderweise herausgefunden hat, lassen sich stabile Pigmentpasten herstellen, die sich zur Einarbeitung in Bindemittelsysteme für Abtönsysteme eignen und die sowohl lösemittelfrei als auch biozid- und konservierungsmittelfrei sind, wenn die wässrige Pigmentpaste eine gewisse Menge an dreiwertigen Ionen der vorgenannten Verbindungen aufweist.

Durch die Verwendung von Aluminiumverbindungen ist es insbesondere möglich, eine Besiedlung wässriger Zusammensetzungen mit alkaliphilen Keime, insbesondere Bakterien, Hefen und Schimmel, zu unterbinden.

Die erfindungsgemäßen wässrigen Zusammensetzungen, insbesondere Pigmentpasten zeigen, insbesondere wenn sie einen basischen pH-Wert aufweisen, keinerlei Resistenzbildung durch Bakterien, Hefen oder Schimmel. Dies liegt insbesondere daran, dass dreiwertige Ionen oftmals schwache keimresistente Eigenschaften aufweisen, was insbesondere für Aluminiumionen gilt. Durch die Verwendung von Verbindungen dreiwertiger Metalle, die in wässriger Lösung dreiwertige Ionen freisetzen, kann insbesondere eine Emissionsfreiheit der Pigmentpaste gewährleistet werden, da die anorganische Verbindung ionischer Natur ist und folglich nicht in die Gasphase übergehen kann. Dieser Übergang von Wirksubstanzen in die Gasphase stellt insbesondere den großen Nachteil lösemittelbasierter Systeme oder von Systemen dar, die Konservierungsmittel oder Biozide enthalten, da diese Stoffe in großem Umfang sowohl bei der Verarbeitung an die Umgebung abgegeben werden als auch nachfolgend von den Beschichtungen abgegeben werden und sich, insbesondere bei Innenanwendung, in der Raumluft ansammeln.

Darüber hinaus ist die erfindungsgemäße wässrige Zusammensetzung, insbesondere Pigmentpaste, üblicherweise alkalisch eingestellt, was die keimresistente Wirkung weiter erhöht.

Es hat sich in den Versuchen der Anmelderin weiterhin gezeigt, dass die anorganische aluminiumhaltige Verbindung eine gewisse Löslichkeit in wässrigen Systemen aufweisen sollte, damit ausreichend dreiwertige Ionen in der Zusammensetzung vorhanden sind, welche dann in entsprechender Konzentration einen keimresistenten Effekt bewirken bzw. Zusammensetzungen, welche die anorganische aluminiumhaltige Verbindung enthalten, eine deutlich erhöhte Keimresistenz verleihen. Die Konzentration der dreiwertigen Ionen darf jedoch nicht zu hoch sein, da andernfalls die Verarbeitungs- und Anwendungseigenschaften der Zusammensetzung stark verschlechtert werden.

Im Rahmen der vorliegenden Erfindung ist es üblicherweise vorgesehen, dass die anorganische aluminiumhaltige Verbindung eine Löslichkeit von weniger als 4 g/l, insbesondere weniger als 3 g/l, vorzugsweise weniger als 2 g/l, bevorzugt weniger als 1,5 g/l, besonders bevorzugt weniger als 1 g/l, bei 20 °C in Wasser aufweist.

Weiterhin kann vorgesehen sein, dass die anorganische aluminiumhaltige Verbindung eine Löslichkeit von mehr als 0,001 g/l, insbesondere mehr als 0,01 g/l, vorzugsweise mehr als 0,1 g/l, bevorzugt mehr als 0,2 g/l, besonders bevorzugt mehr als 0,4 g/l, bei 20 °C in Wasser aufweist.

Darüber hinaus kann es im Rahmen der vorliegenden Erfindung vorgesehen sein, dass die anorganische aluminiumhaltige Verbindung eine Löslichkeit im Bereich von 0,001 bis 5 g/l, insbesondere 0,001 bis 4 g/l, vorzugsweise 0,01 bis 3 g/l, bevorzugt 0,1 bis 2 g/l, besonders bevorzugt 0,2 bis 1,5 g/l, ganz besonders bevorzugt 0,4 bis 1 g/l, bei 20 °C in Wasser aufweist.

Es hat sich gezeigt, dass derartige aluminiumhaltige Verbindungen mit geringer, jedoch nicht zu vernachlässigender Löslichkeit Pigmentpasten in großen Mengen zugesetzt werden können, ohne dass die Brillanz der Pigmentpasten und der Anstrichmittel, die nach Einarbeitung der Pigmentpasten in Bindemittelsysteme erhalten werden, verschlechtert wird.

Gemäß einer bevorzugten Ausführungsform der vorliegenden Erfindung ist es vorgesehen, dass die anorganische aluminiumhaltige Verbindung weiterhin ein zweiwertiges Metall enthält.

Es hat sich herausgestellt, dass insbesondere anorganische Verbindungen mit zwei- und dreiwertigen Metallen besonders gute keimresistente Eigenschaften aufweisen bzw. dass Zusammensetzungen, welche anorganische Verbindungen mit zwei- und dreiwertigen Metallen enthalten, besonders gute keimresistente Eigenschaften aufweisen. Im Rahmen der vorliegenden Erfindung kann es dabei insbesondere vorgesehen sein, dass das zweiwertige Metall ausgewählt ist aus der Gruppe von Magnesium, Calcium, Kupfer, Mangan, Eisen, Zink, und deren Mischungen. Besonders gute Ergebnisse werden in diesem Zusammenhang erhalten, wenn das zweiwertige Metall ausgewählt ist aus Magnesium, Calcium, Kupfer und deren Mischungen. Ganz besonders bevorzugt ist das zweiwertige Metall Calcium.

Im Rahmen der vorliegenden Erfindung werden beste Ergebnisse erhalten, wenn die anorganische aluminiumhaltige Verbindung ausgewählt ist aus Calciumaluminaten.

Es hat sich bewährt, wenn die anorganische aluminiumhaltige Verbindung ausgewählt ist aus der Gruppe von Calciumaluminat-Hydraten, Calciumaluminatsulfat und deren Mischungen, vorzugsweise Calciumaluminatsulfat.

Besonders gute Ergebnisse werden in diesem Zusammenhang erhalten, wenn die anorganische aluminiumhaltige Verbindung ausgewählt ist aus der Gruppe von Tricalciumaluminat-Hydrat [3 CaO * Al₂O₃ * 6 H₂O bzw. Ca₃Al₂(OH)₁₂], Tetracalciumaluminat-Hydrat [4 CaO * Al₂O₃ * 7 H₂O bzw. Ca₄Al₂(OH)₁₄], Calciumaluminatsulfat [Ettringit, 3 CaO * Al₂O₃ * 3 CaSO₄ * 32 H₂O bzw. Ca₆[Al(OH)₆]₂(SO₄)₂ * 26 H₂O] und deren Mischungen. Besonders gute Ergebnisse werden in diesem Zusammenhang erhalten, wenn die anorgansiche aluminiumhaltige Verbindung ausgewählt ist aus Tetracalciumaluminat-Hydrat, Calciumaluminatsulfat und deren Mischungen.

Im Rahmen der vorliegenden Erfindung wird es besonders bevorzugt, wenn die anorganische aluminiumhaltige Verbindung Calciumaluminiumsulfat [Ettringit, 3 CaO * Al₂O₃ * 3 CaSO₄ * 32 H₂O bzw. Ca₆[Al(OH)₆]₂(SO₄)₂ * 26 H₂O] ist. Die Summenformel wird abweichend von der oben dargestellten Schreibweise mit 26 Kristallwassermolekülen auch gelegentlich mit 24 Kristallwassermolekülen angegeben. Gemeint ist jedoch stets die gleiche Verbindung.

Calciumaluminiumsulfat wird in Form wässriger Suspensionen kommerziell vertrieben. Calciumaluminatsulfat ist aus dem Mineral Ettringit aufgebaut und enthält einen Calciumoxidanteil von ca. 13,5 Gew-%, einen Aluminiumoxidanteil von ca. 8 Gew.-% und ein Kristallwassergehalt von ca. 45 Gew.-%. Calciumaluminiumsulfat bzw. Ettringit oder seine wässrige Dispersion, wird unter anderem auch vereinzelt als Weißpigment in Bautenfarben und in der Papierbeschichtung eingesetzt. Calciumaluminiumsulfat weist dabei eine hohe Deckkraft sowie ein starkes Absetz- und rasches Trocknungsverhalten auf, so dass es üblicherweise nicht hochkonzentriert in wässrigen Dispersionen, insbesondere in Anstrichmitteln eingesetzt werden kann. Es hat sich im Rahmen der vorliegenden Erfindung jedoch gezeigt, dass Calciumaluminiumsulfat in hervorragender Weise in hochgefüllten wässrigen Dispersionen stabilisiert werden kann, so dass lagerstabile Pigmentpasten mit einer langen offenen Zeit erhalten werden können.

Noch überraschender ist die Tatsache, dass mit Calciumaluminiumsulfat biozid- und konservierungsmittelfreie Pigmentpasten, die lösemittel- und folglich emissionsfrei sind, erhalten werden können, die eine Farbbrillanz aufweisen und Farbstärken, Farborte und Brillanzen erzielen, die mit den derzeit verwendeten konservierungsmittel- und biozidhaltigen Standardpigmentpasten vergleichbar sind.

Die erfindungsgemäße Zusammensetzung, insbesondere Pigmentpaste, kann als biozid- und konservierungsmittelfreies System, welches darüber hinaus keine Lösemittel aufweist, d.h. VOC-frei ist, in sämtlichen derzeit gebräuchlichen Standardabtönsystemen eingesetzt werden. Insbesondere können die erfindungsgemäßen Zusammensetzungen, insbesondere Pigmentpasten, ohne Umstellung auf den handelsüblichen und weit verbreiteten Maschinen zum Abtönen von Anstrichmitteln eingesetzt werden.

Üblicherweise ist es im Rahmen der vorliegenden Erfindung vorgesehen, dass die anorganische aluminiumhaltige Verbindung in Partikelform vorliegt.

Im Rahmen der vorliegenden Erfindung kann es gemäß einer Ausführungsform vorgesehen sein, dass die anorganische aluminiumhaltige Verbindung eine Korngrößenverteilung D10 im Bereich von 0,05 bis 0,5 µm, insbesondere 0,1 bis 0,4 µm, vorzugsweise 0,15 bis 0,3 µm, bevorzugt 0,18 bis 0,25 µm, aufweist.

Gleichermaßen kann es vorgesehen sein, dass die anorganische aluminiumhaltige Verbindung eine Korngrößenverteilung D50 im Bereich von 1,0 bis 4 µm, insbesondere 1,5 bis 3,0 µm, vorzugsweise 1,8 bis 2,7 µm, bevorzugt 2,0 bis 2,5 µm, aufweist.

Gleichfalls kann es vorgesehen sein, dass die anorganische aluminiumhaltige Verbindung eine Korngrößenverteilung D90 im Bereich von 5,0 bis 10 µm, insbesondere 5,5 bis 8,0 µm, vorzugsweise 6,0 bis 7,5 µm, bevorzugt 6,5 bis 7,0 µm, aufweist.

Unter den Begriffen D10, D50 und D90 ist jeweils zu verstehen, dass 10 % aller Partikel eine geringere Partikelgröße haben bzw. 50 % aller Partikel oder 90 % aller Partikel. Die Partikelgrößen bzw. die Partikelgrößenverteilung können insbesondere über Laserstreuung ermittelt werden.

Für diese Ausführungsform wird es besonders bevorzugt, wenn die anorganische aluminiumhaltige Verbindung, eine Korngrößenverteilung D10 von 0,2 µm eine Korngrößenverteilung D50 von 2 bis 2,5 µm und eine Korngrößenverteilung D90 von 6,8 µm aufweist. Mit den vorgenannten Partikelgrößenverteilungen lassen sich insbesondere bei Verwendung von Calciumaluminiumsulfat (Ettringit) matte Pigmentpasten und Anstrichmittel mit einer hohen Deckkraft erhalten. Allerdings werden der Farbort und die Farbintensität im Vergleich zu Standardpigmentpasten oftmals stark beeinflusst und die Farben sind nicht brillant.

Gemäß einer besonders bevorzugten Ausführungsform der vorliegenden Erfindung weist die anorganische aluminiumhaltige Verbindung eine Korngrößenverteilung D10 im Bereich von 0,05 bis 0,45 µm, insbesondere 0,1 bis 0,4 µm, vorzugsweise 0,15 bis 0,3 µm, bevorzugt 0,18 bis 0,25 µm, auf.

Gleichermaßen kann es gemäß dieser Ausführungsform vorgesehen sein, dass die anorganische aluminiumhaltige Verbindung eine Korngrößenverteilung D50 im Bereich von 0,5 bis 1,8 µm, insbesondere 0,6 bis 1,5 µm, vorzugsweise 0,7 bis 1,2 µm, bevorzugt 0,8 bis 1,0 µm, aufweist.

Darüber hinaus kann es gemäß dieser Ausführungsform vorgesehen sein, dass die anorganische aluminiumhaltige Verbindung eine Korngrößenverteilung D90 im Bereich von 2,0 bis 4 µm, insbesondere 2,2 bis 3,7 µm, vorzugsweise 2,5 bis 3,5 µm, bevorzugt 2,8 bis 3,2 µm, aufweist.

Ganz besonders bevorzugt wird es im Rahmen dieser bevorzugten Ausführungsform, wenn die anorganische aluminiumhaltige Verbindung eine Korngrößenverteilung D10 von 0,2 µm, eine Korngrößenverteilung D50 von 0,9 µm und eine Korngrößenverteilung D90 von 3,0 µm, aufweist. Mit diesen im Vergleich zur zuvor geschilderten Ausführungsform kleineren Partikelgrößen und engeren Partikelgrößenverteilung ist es möglich, brillante Farbpasten zu erzeugen, die Standardpigmentpasten in Mengen von 15 Gew.-% oder mehr hinzugegeben werden können, ohne dass die Brillanz der Farbe, der Farbort oder die Farbintensität merklich geändert werden. Es war nicht abzusehen, dass die anorganischen aluminiumhaltigen Verbindungen, die oftmals Weißpigmente sind, einer Pigmentpaste zugesetzt werden können, ohne dass die Farbeigenschaften und die Anwendungseigenschaften der Pigmentpaste und auch des Bindemittelsystems, in welches die Pigmentpaste eingearbeitet wird, nennenswert geändert werden.

Gemäß einer besonderen Ausführungsform der vorliegenden Erfindung weist die anorganische aluminiumhaltige Verbindung eine bimodale Teilchengrößenverteilung auf. Insbesondere weist die anorganische aluminiumhaltige Verbindung eine bimodale Teilchengrößenverteilung mit den Teilchengrößen und Teilchengrößenverteilung gemäß den zuvor beschriebenen unterschiedlichen Ausführungsformen auf. Auf diese Art sind Farbraum, Farbort, Farbintensität sowie die Brillanz der Zusammensetzung, insbesondere von Pigmentpasten sowie daraus resultierender Anstrichmittel, gezielt einstell- und festlegbar.

Die vorliegende Erfindung ermöglicht somit auf einfache Art und Weise auch die Abmischung neuer Farben, indem die Partikelgrößen der aluminiumhaltigen anorganischen Verbindung gezielt eingestellt werden. Durch die Steuerung der Partikelgröße können insbesondere auch der Mattierungsgrad bzw. die Brillanz und das Deckvermögen der Zusammensetzung, insbesondere einer Pigmentpaste, eingestellt werden.

Was nun die Menge der anorganischen aluminiumhaltigen Verbindung, in der Zusammensetzung anbelangt so kann diese in weiten Bereichen variieren, je nachdem welche Farbeffekte und welche keimresistenten Eigenschaften erzielt werden sollen.

Im Rahmen der vorliegenden Erfindung weist die Zusammensetzung die anorganische aluminiumhaltige Verbindung in Mengen von 2 bis 20 Gew.-%, insbesondere 5 bis 15 Gew.-%, vorzugsweise 6 bis 13 Gew.-%, bevorzugt 7 bis 10 Gew.-%, bezogen auf die Zusammensetzung, auf.

Die erfindungsgemäße Zusammensetzung kann somit die anorganische aluminiumhaltige Verbindung in sehr hohen Mengen erhalten, ohne dass die Farbbrillanz der Pigmentpasten gegenüber den bislang verwendeten biozid- und konservierungsmittelhaltigen Systemen verändert bzw. verschlechtert wird. Die erfindungsgemäße Zusammensetzung erlaubt somit einen einfachen Austausch von Konservierungsmitteln und Bioziden gegen die anorganische Verbindung eines dreiwertigen Metalls, insbesondere die anorganische aluminiumhaltige Verbindung, in allen gängigen Pigmentpasten, bevorzugt Pigmentpasten für Abtönsysteme.

Wie zuvor bereits ausgeführt, weist die Zusammensetzung üblicherweise einen basischen pH-Wert auf. In diesem Zusammenhang hat es sich besonders bewährt, wenn die Zusammensetzung einen pH-Wert von 9,5 oder höher aufweist. Besonders gute Ergebnisse werden in diesem Zusammenhang erhalten, wenn die Zusammensetzung einen pH-Wert im Bereich von 9,5 bis 14, vorzugsweise 9,5 bis 13, bevorzugt 9,5 bis 12, besonders bevorzugt 9,5 bis 11,5, ganz besonders bevorzugt 10,2 bis 11,4, aufweist.

Im Rahmen der vorliegenden Erfindung ist es vorgesehen, dass die Zusammensetzung ein Netz- oder Dispergiermittel aufweist. Die Anwesenheit von Netz- oder Dispergiermitteln ist insbesondere vorteilhaft, um eine Sedimentation der anorganischen Verbindung eines dreiwertigen Metalls, insbesondere der anorganischen aluminiumhaltigen Verbindung, zu verhindern. Eine Sedimentation der anorganischen Verbindung eines dreiwertigen Metalls, insbesondere der anorganischen aluminiumhaltigen Verbindung, würde zu einer raschen Unbrauchbarkeit der Pigmentpasten führen, was durch den Einsatz von Netz- oder Dispergiermitteln verhindert werden kann. Ergänzend wird auch die Dispergierbarkeit von Pigmenten und Füllstoffen erhöht.

Darüber hinaus ist der Einsatz von Netz- und Dispergiermitteln auch aufgrund der relativ hohen Löslichkeit der anorganischen aluminiumhaltigen Verbindung, vorteilhaft, da bei vorhandener Restlöslichkeit kleine Kristalle auf Kosten der großen Kristalle wachsen. Diese Phänomen wird Ostwald-Reifung bezeichnet. Zusätzlich können Agglomerate über die Kristallgrenzen hinweg zusammenwachsen. Hierdurch entstehen größere Teilchen, welche die Coloristik von Pigmentpasten durch die dann größere Wechselwirkung mit Licht und somit einem höheren Weißanteil beeinträchtigen können. Durch die gezielte Formulierung mit Netz- und Dispergiermitteln bleiben die Pasten stabil, ohne dass sich größere Kristallite bilden. Das Netzmittel kann dabei schon bei der Herstellung, insbesondere Fällung, der Partikel der anorganischen aluminiumhaltigen Verbindung zugegeben werden. Vorteilhafterweise wird ein Teil des Gesamtanteils an Netz- und Dispergiermittel bei der Herstellung, insbesondere Fällung, der Partikel der anorganischen aluminiumhaltigen Verbindung zugegeben, während der restliche Teil an Netz- und Dispergiermittel bei der Formulierung der erfindungsgemäßen Zusammensetzung zugegeben wird. Vorzugsweise werden jeweils unterschiedliche Netz- und Dispergiermittel für die Herstellung der Partikel der anorganischen aluminiumhaltigen Verbindung und der Formulierung der erfindungsgemäßen Zusammensetzung eingesetzt.

Wenn die Zusammensetzung ein Dispergiermittel enthält, so ist das Netz- oder Dispergiermittel üblicherweise ausgewählt aus der Gruppe von nichtionischen Polymeren, kationischen Polymeren, anionischen Polymeren und deren Mischungen, insbesondere nichtionischen Copolymeren, anionischen Copolymeren, Copolymeren mit pigmentaffinen Gruppen, Polyethern und deren Mischungen. Als Netz- und Dispergiermittel können somit eine große Anzahl oberflächenaktiver Substanzen, eingesetzt werden. Besonders bevorzugt werden Netz- und Dispergiermittel mit pigmentaffinen Gruppen verwendet.

Besonders gute Ergebnisse werden im Rahmen der vorliegenden Erfindung erhalten, wenn das Netz- oder Dispergiermittel ausgewählt ist aus der Gruppe von Polycarboxylaten, insbesondere Salzen von Polyacrylsäuren, Polyphosphaten, insbesondere linearen Polyphosphate und/oder cyclischen Methaphosphaten, Polyetherphosphaten, Polycarbonsäurepolymeren, Acrylblock-Copolymeren, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, Fluortensiden und deren Mischungen.

Das Molgewicht des eingesetzten Netz- oder Dispergiermittels kann gleichermaßen in weiten Bereichen variieren. Üblicherweise weist das eingesetzte Netz- oder Dispergiermittel ein mittleres, insbesondere gewichtsmittleres Molekulargewicht von mindestens 1.000 g/mol, vorzugsweise mindestens 1.500 g/mol, auf. Im Allgemeinen weist der polymere Stabilisator ein mittleres, insbesondere gewichtsmittleres Molekulargewicht im Bereich von 1.000 bis 1.000.000 g/mol, insbesondere 1.250 bis 100.000 g/mol, vorzugsweise 1.500 bis 75.000 g/mol, besonders bevorzugt 2.000 bis 50.000 g/mol, auf.

Erfindungsgemäß ist das Netz- oder Dispergiermittel auf Basis eines funktionalisierten, insbesondere sauer und/oder basisch funktionalisierten, Polymers, insbesondere mit polaren funktionellen Gruppen, ausgebildet. Im Rahmen der Erfindung ist das Netz- oder Dispergiermittel aus der Gruppe von funktionalisierten Polyaminen, funktionalisierten Polyurethanen, funktionalisierten Poly(meth)acrylaten, funktionalisierten Vinylcopolymeren, funktionalisierten Polyether/Polyester-Copolymeren, funktionalisierten Polyethern, funktionalisierten Polyestern, funktionalisierten Fettsäurecopolymeren, funktionalisierten Blockcopolymeren und/oder funktionalisierten Polyalkoxylaten sowie Mischungen oder Kombinationen von mindestens zwei dieser Verbindungen ausgewählt.

Üblicherweise kann das Netz- oder Dispergiermittel auf Basis eines funktionalisierten insbesondere sauer und/oder basisch funktionalisierten, Polymers ausgebildet sein, wobei das Polymer mindestens eine funktionelle Gruppe enthält, welche insbesondere ausgewählt sein kann aus der Gruppe von Hydroxyl-(-OH), Thiol- (-SH), Amin-, Ammonium-, Carboxyl-, Carbonyl-, Ester-, Ether-, Sulfonyl-, Phosphonsäure, Phosphorsäure- und/oder Phosphorsäureester-Funktionen, vorzugsweise Hydroxyl- (-OH), Thiol- (-SH) und/oder Amin-Funktionen.

Im Falle einer basischen Funktionalisierung kann die betreffende Basenzahl des Polymers insbesondere mindestens 10 mg KOH/g, insbesondere mindestens 20 mg KOH/g, vorzugsweise mindestens 25 mg KOH/g, betragen, und im Fall einer sauren Funktionalisierung kann die Säurezahl insbesondere mindestens 10 mg KOH/g, vorzugsweise mindestens 25 mg KOH/g, besonders bevorzugt mindestens 50 mg KOH/g, betragen. Im Falle von Polymeren mit saurer und basischer Funktionalisierung gelten beide vorgenannten Werte.

In bevorzugter Weise kann das Netz- oder Dispergiermittel aus den nachfolgend genannten Dispergier- und/oder Netzmitteln ausgewählt sein, wie sie in den nachfolgend aufgeführten Druckschriften beschrieben sind, deren jeweiliger Offenbarungsgehalt hiermit durch Bezugnahme eingeschlossen ist:
- Polyurethane gemäß EP 0 154 678 A und EP 0 318 999 A;
- Polyurethane gemäß EP 0 270 126 A;
- modifizierte Polyurethane und Polyamine gemäß EP 1 593 700 A;
- versalzte Polyamine gemäß EP 0 893 155 A;
- Phosphorsäureester gemäß EP 0 417 490 A;
- verzweigte, Imidazolgruppen enthaltende Polymere gemäß EP 1 081 169 A;
- Ethoxylate, insbesondere alkoxylierte Epoxid/Amin-Adukte, gemäß EP 1 650 246 A und Epoxid-Adukte gemäß EP 1 486 524 A;
- Copolymerisate mit Fettsäure gemäß EP 1 640 389 A;
- umgeesterte Polyacrylate gemäß EP 0 879 860 A;
- säurefunktionelle Polyester gemäß WO 2005/097872 A;
- Blockcopolymere (Gradientencopolymere) gemäß EP 1 416 019 A.

Im Rahmen der vorliegenden Erfindung enthält die Zusammensetzung das Netz- oder Dispergiermittel in Mengen 1 bis 50 Gew.-%, insbesondere 3 bis 45 Gew.-%, vorzugsweise 5 bis 40 Gew.-%, bevorzugt 8 bis 35 Gew.-%, bezogen auf die Zusammensetzung.

Zur Stabilisierung sowohl von Pigmenten als auch der anorganischen aluminiumhaltigen Verbindung werden vorzugsweise größere Mengen an Netz- oder Dispergiermittel in der Zusammensetzung eingesetzt.

Im Rahmen der vorliegenden Erfindung weist die Zusammensetzung
(a) eine anorganische aluminiumhaltige Verbindung in Mengen von 2 bis 20 Gew.-%,
(b) ein Netz- oder Dispergiermittel in Mengen von 1 bis 50 Gew.-%,
jeweils bezogen auf die Zusammensetzung, auf.

Im Rahmen der vorliegenden Erfindung ist es weiterhin vorgesehen, dass die Zusammensetzung ein Feuchthaltemittel aufweist.

Unter einem Feuchthaltemittel ist im Rahmen der vorliegenden Erfindung eine Verbindung zu verstehen, die Wasser zu binden vermag und verhindert, dass die Zusammensetzung schnell austrocknet. Dies ist insbesondere wichtig, da viele anorganische Verbindungen dreiwertiger Metalle, insbesondere anorganische aluminiumhaltige Verbindungen, schnell austrocknen. Dies ist jedoch bei einer Pigmentpaste, die über Wochen in einer Maschine des Abtönsystems vorgehalten wird, nicht akzeptabel.

Das Feuchthaltemittel ist erfindungsgemäß ausgewählt aus der Gruppe von Polyethylenglykolen, Tripropylengylkol, Polypropylenglykol, Polyakylenglykol, Glycerin, Glycerinethoxylat, Polyethern, Polyurethanen und deren Mischungen

Im Rahmen der vorliegenden Erfindung ist es vorgesehen, dass die Zusammensetzung das Feuchthaltemittel in Mengen von 0,1 bis 30 Gew.-%, insbesondere 1 bis 25 Gew.-%, vorzugsweise 2 bis 20 Gew.-%, bevorzugt 5 bis 15 Gew.-%, bezogen auf die Zusammensetzung, enthält.

Im Rahmen der vorliegenden Erfindung enthält die Zusammensetzung
(a) eine anorganische aluminiumhaltige Verbindung in Mengen von 2 bis 20 Gew.-%,
(b) ein Netz- oder Dispergiermittel in Mengen von 1 bis 50 Gew.-%,
(c) ein Feuchthaltemittel in Mengen von 0,1 bis 30 Gew.-%,
jeweils bezogen auf die Zusammensetzung.

Im Rahmen der vorliegenden Erfindung ist es vorgesehen, dass die Zusammensetzung ein Pigment aufweist.

Üblicherweise ist das Pigment ausgewählt aus der Gruppe von organischen Pigmenten, anorganischen Pigmenten und deren Mischungen.

Im Allgemeinen ist das im Rahmen der vorliegenden Erfindung eingesetzte Pigment ausgewählt aus der Gruppe von organischen und/oder anorganischen Pigmenten, insbesondere Pigmentrußen, Metalloxiden, insbesondere Oxiden von Titan, Zink, Eisen und/oder Cer, sowie deren Mischungen.

Geeignete organische Pigmente umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen. Des Weiteren können die organischen Pigmente beispielsweise ausgewählt sein aus: Carmine, Carbon Black, Anilinschwarz, Azogelb, Chinacridon, Phthalocyaninblau. Beispiele hierfür sind: PY 74, PY 65, PY 110, PR 112, PR 122, PR 254, PR 168, PO 5, PG 7, PB 15:1, PB 15:2, PB 15:3, PB 15:4 und PBk 7.

Geeignete anorganische Pigmente umfassen beispielsweise Metalloxide bzw. andere in Wasser schwerlösliche oder zumindest im Wesentlichen unlösliche Metallverbindungen, insbesondere Oxide von Titan, beispielsweise Titandioxid (CI 77891), Zink, Eisen, beispielsweise rotes und schwarzes Eisenoxid (CI 77491 (rot), 77499 (schwarz)) oder Eisenoxidhydrat (CI 77492, gelb), Zirkonium, Silizium, Mangan, Aluminium, Cer, Chrom sowie Mischoxide der genannten Elemente und deren Mischungen. Weitere geeignete Pigmente sind Bariumsulfat-, Zinksulfid-, Manganviolett-, Ultramarinblau- und Berliner Blau-Pigmente. Die Pigmente können oberflächenmodifiziert sein, wobei die Oberflächen durch die Modifizierung beispielsweise hydrophile, amphiphile oder hydrophobe Verbindungen bzw. Gruppen aufweisen können. Insbesondere können die anorganischen Pigmente PR 101, PY 42, Pb 28, Pb 29, PW 6 und Pbk 33 eingesetzt werden. Die Oberflächenbehandlung kann darin bestehen, dass die Pigmente nach für den Fachmann bekannten Verfahren mit einer dünnen hydrophilen und/oder hydrophoben anorganischen bzw. organischen Schicht versehen werden.

Im Rahmen der vorliegenen Erfindung hat es sich jedoch bewährt, wenn das Pigment ausgewählt ist aus der Gruppe von Titandioxid, Eisenoxidgelb, Eisenoxidrot, Bismutvanadat, Rußschwarz, Toluidinrot, Phthalocyanin, Phthalocyaninblau, Monoazogelb, Isoindolinongelb, Chinacridon, Benzimidazolon, Diketopyrrolopyrrolrot und deren Mischungen.

Die Zusammensetzung enthält das Pigment in Mengen von 5 bis 85 Gew.-%, insbesondere 6 bis 80 Gew.-%, vorzugsweise 8 bis 75 Gew.-%, bevorzugt 10 bis 70 Gew.-%, bezogen auf die Zusammensetzung.

Im Rahmen der vorliegenden Erfindung ist es somit vorgesehen, dass die Zusammensetzung
(a) eine anorganische aluminiumhaltige Verbindung in Mengen von 2 bis 20 Gew.-%,
(b) ein Netz- oder Dispergiermittel in Mengen von 1 bis 50 Gew.-%,
(c) ein Feuchthaltemittel in Mengen von 0,1 bis 30 Gew.-%,
(d) ein Pigment in Mengen von 5 bis 85 Gew.-%,
jeweils bezogen auf die Zusammensetzung, enthält.

Vorzugsweise weist die vorgenannte Zusammensetzung einen basischen pH-Wert auf. Für diese Ausführungsform der vorliegenden Erfindung gelten alle zuvor genannten Vorteile, bevorzugten Merkmale und Besonderheiten, die zuvor im Zusammenhang mit anderen Ausführungsformen genannt wurden, entsprechend.

Im Rahmen der vorliegenden Erfindung ist es insbesondere üblicherweise vorgesehen, dass die Zusammensetzung ein pH-Stellmittel aufweist. Bei einem pH-Stellmittel wird der pH-Wert insbesondere auf besonders bevorzugte Bereiche sowohl für die Stabilität der Zusammensetzung als auch zur Verhinderung eines Befalls mit Keimen eingestellt.

Das pH-Stellmittel ist dabei üblicherweise ausgewählt aus anorganischen und organischen Säuren und Basen, insbesondere anorganischen und organischen Basen, vorzugsweise anorganischen Basen.

Wenn die Zusammensetzung ein pH-Stellmittel enthält, so hat es sich bewährt, wenn das pH-Stellmittel ausgewählt ist aus der Gruppe von Salzsäure, Schwefelsäure, Salpetersäure, Zitronensäure, Pyridincarbonsäure, Essigsäure, Natriumhydroxid, Kaliumhydroxid, Lithiumhydroxid, Calciumhydroxid, Ammoniak, Wasserglas, Dimethylglucamin und deren Mischungen. Vorzugsweise ist das pH-Stellmittel ausgewählt aus der Gruppe von Natriumhydroxid, Kaliumhydroxid, Lithiumhydroxid, Calciumhydroxid, Ammoniak, Wasserglas, Dimethylglucamin und deren Mischungen.

Wenn die Zusammensetzung ein pH-Stellmittel enthält, so enthält die Zusammensetzung das pH-Stellmittel üblicherweise in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung.

Vorteilhafterweise weist die Zusammensetzung üblicherweise mindestens ein Additiv auf. Üblicherweise ist das Additiv ausgewählt aus der Gruppe von Rheologieadditiven, Stabilisatoren, entschäumenden Komponenten, Verdickern, pH-Stabilisatoren, Rheologieverbesserern und deren Mischungen.

Als Rheologieadditive bzw. Verdicker können beispielsweise natürliche organische Polymere und ihre Derivate mit Xanthan Gum, Gummi arabicum, Karaya, Tragant, Johannisbrotkernmehl, Guar, Quittenschleim, Pektin, Agar-Agar, Carrageen, Alginate, Stärke und Stärkederivate, Cellulose und deren Derivate, wie beispielsweise Methylcellulose, Carboxymethylcellulose, Hydroxyethylcellulose, Hydroxypropylcellulose, Hydroxypropylmethylcellulose und Methylhydroxyethylcellulose, sowie Gelatine, bevorzugt Xanthan Gum, Anwendung finden. Gleichfalls können anorganische Schichtsilikate wie Bentonite, Hectorite und Magnesium-Aluminium-Silikate verwendet werden, wie auch Verdicker auf Basis von Polyacrylaten (z.B. Carbopol-Typen der Firma Lubrizol, z. B. Carbopol ETD 2020 oder Aqua SF-1), HEUR (*Hydrophobically Modified Ethoxylated Urethane Polymers*), Polyurethanverdicker (z. B. spezielle Aculyn-Typen der Firma Rohm & Haas), kolloidale Kieselsäure sowie harnstoff- und/oder polyamidbasierte Rheologiemodifizierer, welche jeweils allein oder in Kombination verwendet werden können.

Als entschäumende Komponenten eignen sich in der Regel geringe Mengen an hydrophoben Bestandteilen, wie z. B. Vaselinöl (INCI: Petrolatum), Rizinusöl, Mineralöle, Pflanzenöle oder die unter den INCI-Namen bekannten Silikonverbindungen, wie z. B. Bisphenylhexamethicone, Dimethicone, Dimethicone Silylate, Dimethiconol, Diphenyl Dimethicone, Diphenylsiloxy Phenyl Trimethicone, Disiloxane, PEG/PPG-12/16 Dimethicone, PEG/PPG-12/18 Dimethicone, PEG/PPG-16/8 Dimethicone, PEG/PPG-8/26 Dimethicone, Phenetyl Disiloxane, Phenyl Dimethicone, Phenyl Trimethicone, Polysilicone-1, Polysilicone-2, Polysilicone-7, Polysilicone-8, Polysilicone-10, Silica Dimethicone Silylate, Silica Silylate, Simethicone, Trimethylsiloxysilicate, Trimethylsiloxysilicate/Dimethicone Crosspolymer, Triphenyl Trimethicone und Trisiloxane, Behenyl Methacrylate/Ethylamine Oxide, Methacrylate Copolymer, C12-14 Sec-Pareth-5, Hexamidine Diisothionate, Hexyldeceth-2, Laureth-5 Butyl Ether, Rhus Semialata Leaf Extract, sowie die Kombination von hydrophoben Bestandteilen mit Feststoffen, beispielsweise Silica, wie Sipernat^{®}-Typen der Firma Evonik Industries. Alkohole, wie z. B. Ethanol, Isopropanol, Hexan-1-ol, Propan-2-ol, können insbesondere in größeren Einsatzmengen ebenfalls entschäumend wirken.

Wenn die Zusammensetzung ein Additiv aufweist, so hat es sich bewährt, wenn die Zusammensetzung das Additiv in Mengen von 0,01 bis 10 Gew.-%, insbesondere 0,1 bis 8 Gew.-%, vorzugsweise 0,5 bis 6 Gew.-%, bevorzugt 1 bis 5 Gew.-%, bezogen auf die Zusammensetzung, enthält.

Im Rahmen der vorliegenden Erfindung werden somit besonders gute Ergebnisse erhalten, wenn die Zusammensetzung
(a) eine anorganische aluminiumhaltige Verbindung in Mengen von 2 bis 20 Gew.-%,
(b) ein Netz- oder Dispergiermittel in Mengen von 1 bis 50 Gew.-%,
(c) ein Feuchthaltemittel in Mengen von 0,1 bis 30 Gew.-%,
(d) ein Pigment in Mengen von 5 bis 85 Gew.-%,
(e) ein pH-Stellmittel, insbesondere in Mengen von 0,1 bis 10 Gew.-%,
(f) ein Additiv, insbesondere in Mengen von 0,01 bis 10 Gew.-%,
jeweils bezogen auf die Zusammensetzung, enthält.

Für diese Ausführungsformen gelten alle Merkmale, Vorteile und Besonderheiten, die zuvor im Zusammenhang mit anderen Ausführungsformen beschrieben wurden, entsprechend.

Wie zuvor bereits ausgeführt, ist die Zusammensetzung eine wässrige Zusammensetzung. Im Rahmen der vorliegenden Erfindung enthält die Zusammensetzung Wasser üblicherweise in Mengen von 1 bis 80 Gew.-%, insbesondere 2 bis 60 Gew.-%, vorzugsweise 3 bis 50 Gew.-%, bevorzugt 5 bis 40 Gew.-%, bezogen auf die Zusammensetzung.

Im Rahmen der vorliegenden Erfindung werden somit besonders gute Ergebnisse erhalten, wenn die Zusammensetzung
(a) eine anorganische aluminiumhaltige Verbindung in Mengen von 2 bis 20 Gew.-%,
(b) ein Netz- oder Dispergiermittel in Mengen von 1 bis 50 Gew.-%,
(c) ein Feuchthaltemittel in Mengen von 0,1 bis 30 Gew.-%,
(d) ein Pigment in Mengen von 5 bis 85 Gew.-%,
(e) ein pH-Stellmittel, insbesondere in Mengen von 0,1 bis 10 Gew.-%,
(f) ein Additiv, insbesondere in Mengen von 0,01 bis 10 Gew.-%,
(g) Wasser, insbesondere in Mengen von 1 bis 80 Gew.-%,
jeweils bezogen auf die Zusammensetzung, enthält.

Für diese Ausführungsform der vorliegenden Erfindung gelten alle zuvor genannten Vorteile, bevorzugten Merkmale und Besonderheiten, die zuvor im Zusammenhang mit anderen Ausführungsformen genannt wurden, entsprechend.

Im Rahmen der vorliegenden Erfindung ist es gemäß einer bevorzugten Ausführungsform weiterhin vorgesehen, dass die Zusammensetzung eine weitere anorganische oder organische Verbindung eines dreiwertigen Metalls, insbesondere eine weitere anorganische oder organische aluminiumhaltige Verbindung, aufweist. Diese Verbindung ist im Vergleich zur vorgenannten anorganischen aluminiumhaltigen Verbindung üblicherweise in deutlich höherem Maße in Wasser löslich. Durch die Anwesenheit einer weiteren anorganischen oder organischen Verbindung eines dreiwertigen Metalls kann zum Beispiel die Löslichkeit der zuvor detailliert beschriebenen anorganischen aluminiumhaltigen Verbindung gezielt eingestellt bzw. herabgesetzt werden, da durch den Zusatz weiterer Verbindungen von dreiwertigen Metallen, insbesondere bei gleichionigen Zusätzen, das Löslichkeitsprodukt der anorganischen Verbindung eines dreiwertigen Metalls schnell überschritten ist.

Auf diese Weise kann eine retardierte Löslichkeit der anorganischen aluminiumhaltigen Verbindung erzielt werden, da die Verbindung nur weiter in Lösung geht, wenn die dreiwertigen Ionen dem Gleichgewicht entzogen werden, beispielsweise durch Bildung schwerlöslicher Verbindungen.

Die anorganische Verbindung eines dreiwertigen Metalls ist dabei insbesondere ausgewählt aus der Gruppe von Yttrium, Scandium, Lanthan, den Lanthanoiden, Vanadium, Chrom, Molybdän, Wolfram, Eisen, Bor, Aluminium und deren Mischungen. Vorzugsweise ist das dreiwertige Metall ausgewählt aus der Gruppe von Scandium, Yttrium, Lanthan, Cer, Bor, Aluminium und deren Mischungen. Ganz besonders bevorzugt ist das dreiwertige Metall ausgewählt aus der Gruppe von Lanthan, Cer, Bor, Aluminium und deren Mischungen. Beste Ergebnisse werden enthalten, wenn das dreiwertige Metall Aluminium ist.

Unter einem dreiwertigen Metall ist im Rahmen der vorliegenden Erfindung insbesondere ein Metall zu verstehen, das unter Normalbedingungen, d.h. bei 25 °C und einem Druck von 1,013 bar, stabile Ionen in der Oxidationsstufe + III bildet.

Im Rahmen der vorliegenden Erfindung werden besonders gute Ergebnisse erhalten, wenn die weitere anorganische oder organische Verbindung eines dreiwertigen Metalls, insbesondere die weitere anorganische oder organische aluminiumhaltige Verbindung, ausgewählt ist aus der Gruppe von Aluminiumhalogeniden, insbesondere Aluminiumtrichlorid, Aluminiumhydroxid, Aluminiumhydroxidhalogeniden, insbesondere Aluminiumdihydroxidchlorid, Aluminiumcarboxylaten und deren Mischungen.

Wenn die Zusammensetzung eine weitere anorganische oder organische Verbindung eines dreiwertigen Metalls enthält, insbesondere eine anorganischen oder organischen aluminiumhaltige Verbindung, so hat es sich bewährt, wenn die Zusammensetzung die weitere anorganische oder organische Verbindung eines dreiwertigen Metalls, insbesondere die weitere anorganische oder organische aluminiumhaltige Verbindung, in Mengen von 0,1 bis 5 Gew.-%, insbesondere 0,2 bis 4 Gew.-%, vorzugsweise 0,3 bis 3 Gew.-%, bevorzugt 0,5 bis 2 Gew.-%, bezogen auf die Zusammensetzung, enthält.

Neben der Zugabe einer weiteren anorganischen oder organische Verbindung eines dreiwertigen Metalls, insbesondere einer anorganischen oder organischen aluminiumhaltigen Verbindung, welche insbesondere bei Zusatz gleichartiger Ionen die Löslichkeit der anorganischen aluminiumhaltigen Verbindung mit einer Löslichkeit von weniger als 5 g/l bei 20 °C herabsetzt bzw. retardiert, gibt es noch weitere Möglichkeiten, die Löslichkeit der Verbindung herabzusetzen bzw. eine retardierte Löslichkeit zu erzeugen. So ist es beispielsweise möglich, die Partikel der anorganischen aluminiumhaltigen Verbindung zu verkapseln bzw. zu beschichten. Die Beschichtung bzw. das Kapselmaterial ist entweder geringfügig porös oder wird im Laufe der Zeit abgebaut, so dass zeitlich verzögert ein größerer Anteil der anorganischen aluminiumhaltigen Verbindung mit einer Löslichkeit von weniger als 5 g/l bei 20 °C in Lösung gehen kann.

Darüber hinaus ist es auch möglich, die Partikel der anorganischen aluminiumhaltigen Verbindung mit einer Löslichkeit von weniger als 5 g/l bei 20 °C mit Tensiden, wie beispielsweise Alkancarbonsäuren, insbesondere Ölsäure, zu versetzen, so dass sich an der Oberfläche der Partikel eine Doppelschicht aus dem Tensid bildet, wodurch die anorganische aluminiumhaltige Verbindung gleichsam eingekapselt und die Löslichkeit retardiert wird.

Im Rahmen der vorliegenden Erfindung werden somit besonders gute Ergebnisse erhalten, wenn die Zusammensetzung
(a) eine anorganische aluminiumhaltige Verbindung in Mengen von 2 bis 20 Gew.-%,
(b) ein Netz- oder Dispergiermittel in Mengen von 1 bis 50 Gew.-%,
(c) ein Feuchthaltemittel in Mengen von 0,1 bis 30 Gew.-%,
(d) ein Pigment in Mengen von 5 bis 85 Gew.-%,
(e) ein pH-Stellmittel, insbesondere in Mengen von 0,1 bis 10 Gew.-%,
(f) ein Additiv, insbesondere in Mengen von 0,01 bis 10 Gew.-%,
(g) Wasser, insbesondere in Mengen von 1 bis 80 Gew.-%,
(h) eine weitere anorganische Verbindung eines dreiwertigen Metalls, insbesondere in Mengen von 0,1 Gew.-%,
jeweils bezogen auf die Zusammensetzung, enthält.

Für die Ausführungsform gelten alle Merkmale, Vorteile und Besonderheiten, die zuvor im Zusammenhang mit weiteren Ausführungsformen beschrieben wurden, entsprechend.

Darüber hinaus ist es möglich, dass die Zusammensetzung Füllstoffe enthält. Wenn die Zusammensetzung Füllstoffe enthält, so sind die Füllstoffe üblicherweise anorganische Füllstoffe. Es hat sich dabei bewährt, wenn die Füllstoffe ausgewählt sind aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen.

Weiterhin werden gute Ergebnisse erhalten, wenn die Zusammensetzung die Füllstoffe in Mengen von 1 bis 30 Gew-%, insbesondere 2 bis 25 Gew.-%, vorzugsweise 3 bis 20 Gew.-%, bevorzugt 4 bis 15 Gew.-%, besonders bevorzugt 5 bis 10 Gew.-%, bezogen auf die Zusammensetzung, enthält.

Darüber hinaus gilt, dass alle Ausführungsformen der wässrigen Zusammensetzung vorzugsweise einen basischen pH-Wert aufweisen.

Im Rahmen der vorliegenden Erfindung ist es üblicherweise vorgesehen, dass die Zusammensetzung zumindest im Wesentlichen frei ist von Konservierungsstoffen, insbesondere frei ist von Konservierungsmitteln.

Gleichermaßen ist im Rahmen der vorliegenden Erfindung vorzugsweise vorgesehen, dass die Zusammensetzung zumindest im Wesentlichen frei ist von Bioziden, insbesondere frei ist von Bioziden.

Die erfindungsgemäßen Zusammensetzungen enthalten vorzugsweise keine Konservierungsmittel, keine Biozide und sind auch frei von flüchtigen organischen Verbindungen, d.h. VOC-frei, so dass sie üblicherweise keine deklarationspflichtigen Stoffe enthalten und unter Gesichtspunkten des Umweltschutzes, des Gesundheitsschutzes, sowie des Arbeitsschutzes problemlos und vielfältig angewendet werden können.

Darüber hinaus sind die erfindungsgemäßen Zusammensetzungen lagerstabil, insbesondere über einen Zeitraum von mindestens 2 Monaten, insbesondere mindestens 4 Monaten, insbesondere mindestens 6 Monaten, vorzugsweise mindestens 12 Monaten. Gleichermaßen kann es vorgesehen sein, dass die erfindungsgemäßen Zusammensetzungen über einen Zeitraum von 2 bis 36 Monate, insbesondere 4 bis 20 Monate, insbesondere 6 bis 18 Monate, vorzugsweise 12 bis 15 Monate, lagerstabil ist.

Unter "lagerstabil" ist dabei zu verstehen, dass sich die physikalischen und chemischen Eigenschaften der Zusammensetzung während der Lagerung nicht oder nur in einem Maße ändern, welches die Anwendungseigenschaften der Zusammensetzung nicht beeinträchtigt.

Weiterer Gegenstand der vorliegenden Erfindung - gemäß einem **zweiten** Aspekt der vorliegenden Erfindung - ist die Verwendung einer zuvor beschriebenen wässrigen Zusammensetzung als Pigmentpaste zur Abtönung von Bindemittelsystemen, insbesondere von Anstrichmitteln, vorzugsweise von Dispersionsfarben.

Das Bindemittelsystem, insbesondere die Abtönbasis bzw. Basiszusammensetzung, ist insbesondere ein vorzugsweise wässriges Bindemittelsystem. Üblicherweise ist die Abtönbasis eine wässrige Dispersion, ein Wasserlack, eine Dispersionsfarbe, eine Kalkfarbe, eine Silikatfarbe, eine Silikonharzfarbe, eine Dispersionssilikatfarbe eine Sol-Silikatfarbe, eine Nanohybridfarbe oder deren Mischung, vorzugsweise eine Dispersionsfarbe. Es kann jedoch auch sein, dass die Abtönbasis eine lösemittelhaltige Dispersion oder ein Lösemittellack ist. Vorzugsweise wird jedoch eine wässrige Abtönbasis eingesetzt, welche bevorzugt lösemittelfrei ist, insbesondere einen VOC-Gehalt von weniger als 1 g/l aufweist.

Wie zuvor ausgeführt, enthält die Abtönbasis üblicherweise ein Bindemittel in wässriger Dispersion. Hierbei kann es vorgesehen sein, dass die Abtönbasis ein organisches Bindemittel in Form einer wässrigen Dispersion eines Polymers enthält. Vorzugsweise ist das Polymer ausgewählt aus Acrylaten, Vinylacetat und/oder Styrol, insbesondere auf Basis von Reinacrylaten und/oder Terpolymeren der genannten Verbindungen, vorzugsweise Reinacrylaten. Gleichermaßen kann jedoch auch ein anorganisches Bindemittel verwendet werden, wie beispielsweise Wasserglas oder Kieselsol oder auch ein Organohybridbindemittel, insbesondere eine wässrige Organosilikat-Hybriddispersion und/oder Stärke und/oder Stärkehybridbindemittel. Gleichermaßen ist es auch möglich, dass Acrylharze, Acrylsilikonharze, Silikonharze, Urethanharze, ungesättigte Polyesterharze oder Alkydharze sowie deren Mischungen eingesetzt werden.

Vorzugsweise weist die Abtönbasis jedoch ein organisches Bindemittel auf. Besonders gute Ergebnisse werden in diesem Zusammenhang erhalten, wenn die Abtönbasis ein Polymer ausgewählt aus Vinylacetat/Ethylen-Copolymeren, Copolymeren auf Basis von Vinylaromaten, insbesondere Styrol und Acrylaten, oder auf Basis von Reinacrylaten, insbesondere auf der Basis von Reinacrylaten, aufweist. Reinacrylate umfassen Homo- und insbesondere Copolymere von (Meth)Acrylaten, d.h. Acrylaten und/oder Methacrylaten, die gegebenenfalls auch mit (Meth)Acrylsäure, d.h. Acryl- und/oder Methacrylsäure als Comonomerbaustein. Das organische Bindemittel wird vorzugsweise wie zuvor ausgeführt in Form einer wässrigen Bindemitteldispersion eingesetzt.

Für weitergehende Einzelheiten zu der erfindungsgemäßen Verwendung kann auf die obigen Ausführungen zu der erfindungsgemäßen Zusammensetzung verwiesen werden, welche in Bezug auf die erfindungsgemäße Verwendung entsprechend gelten.

Weiterer Gegenstand der vorliegenden Erfindung - gemäß einem **dritten** Aspekt der vorliegenden Erfindung - ist ein Kit-of-Parts, enthaltend eine zuvor genannte Zusammensetzung und eine Abtönbasis, insbesondere ein Anstrichmittel, vorzugsweise eine Dispersionsfarbe.

Mit dem erfindungsgemäßen Kit-of-Parts können nahezu beliebige organische und anorganische Bindemittelsysteme konservierungsmittelfrei und biozidfrei in wasserbasierten, vorzugsweise rein wasserbasierten, Systemen erhalten werden.

Das erfindungsgemäße Kit-of-Parts eignet sich insbesondere zur Herstellung konservierungsmittelfreier und biozidfreier Abtönsysteme bzw. abgetönter Anstrichsysteme und für die Herstellung von abgetönten wässrigen Lasuren, Wasserlacken, Anstrichfarben, insbesondere Dispersionsfarben, Kalkfarben, Silikatfarben, Silikonharzfarben, Dispersionsilikatfarben, Sol-Silikatfarben und/oder Nanohydbridfarben. Für weitere Einzelheiten der Abtönbasis wird auf die obigen Ausführungen zu der erfindungsgemäßen Verwendung verwiesen.

Gemäß einer bevorzugten Ausführungsform weist das Bindemittel, insbesondere die Dispersionsfarbe, einen Komplexbildner und/oder einen pH-Stabilisator, auf.

Die Anwesenheit eines Komplexbildners oder eines pH-Stabilisators in der Abtönbasis, insbesondere der Dispersionsfarbe ist bevorzugt, da durch die Anwesenheit drei- und gegebenenfalls auch zweiwertiger Ionen in nicht zu vernachlässigenden Mengen in der erfindungsgemäßen Zusammensetzung, insbesondere Pigmentpaste, oftmals eine ungewünschte Eindickung der Bindemittelsysteme beobachtet wird. Dies kann zuverlässig entweder durch die Zugabe eines Komplexbildners oder oftmals auch eines pH-Stabilisators verhindert werden.

Im Rahmen der vorliegenden Erfindung wird es bevorzugt, wenn die Abtönbasis bzw. Dispersionsfarbe den Komplexbildner und/oder den pH-Stabilisator in Mengen von 0,1 bis 10 Gew.-%, insbesondere 0,2 bis 8 Gew.-%, vorzugsweise 0,5 bis 5 Gew.-%, bezogen auf die Abtönbasis, enthält.

Wenn die Abtönbasis, insbesondere die Dispersionsfarbe, einen Komplexbildner enthält, so hat es sich bewährt, wenn der Komplexbildner ausgewählt ist aus der Gruppe von Phosphonsäuren, Phosphonaten, Polyphosphaten, Hydroxycarbonsäuren, Dicarbonsäuren, Aminosäuren, Porphyrinen und deren Mischungen, vorzugsweise Phosphonsäuren, Phosphonaten und deren Mischungen.

Besonders bevorzugt ist der Komplexbildner ausgwählt aus der Gruppe von HEDP 1-Hydroxy-ethan-(1,1-diphosphonsäure) (HEDP), Pentanatrium-Aminotrimethylenphosphonsäure (Na₅ATMP)), Tetranatrium-Hydroxyethandiphosphonsäure (Na₄HEDP) und deren Mischungen.

Was den pH-Stabilisator anbelangt, so kann dieser aus einer Vielzahl von Systemen ausgewählt werden. Besonders gute Ergebnisse werden im Rahmen der vorliegenden Erfindung jedoch erhalten, wenn der pH-Stabilisator ausgewählt ist aus der Gruppe von pH-Puffersystemen, insbesondere basischen pH-Puffersystemen.

Für weitere Einzelheiten zu dem erfindungsgemäßen Kit-of-Parts kann auf die obigen Ausführungen zu den anderen Erfindungsaspekten verwiesen werden, welche in Bezug auf das erfindungsgemäße Kit-of-Parts entsprechend gelten.

Wiederum weiterer Gegenstand der vorliegenden Erfindung - gemäß einem **vierten** Aspekt der vorliegenden Erfindung - ist eine Zusammensetzung, insbesondere ein Halbfabrikat und/oder ein Vorprodukt, zur Herstellung einer zuvor genannten Zusammensetzung, insbesondere Pigmentpaste, wobei die Zusammensetzung, jeweils bezogen auf die Zusammensetzung, enthält:
(i) eine anorganische aluminiumhaltige Verbindung mit einer Löslichkeit von weniger als 5 g/l bei 20 °C in Wasser in Mengen von 20 bis 80 Gew.-%,
(ii) Wasser in Mengen von 10 bis 60 Gew.-%, und
(iii) Feuchthaltemittel in Mengen von 1 bis 10 Gew.-%, wobei das Feuchthaltemittel aus der Gruppe von Polyethylenglykolen, Tripropylengylkol, Polypropylenglykol, Polyakylenglykol, Glycerin, Glycerinethoxylat, Polyethern, Polyurethanen und deren Mischungen ausgewählt ist.

Die Zusammensetzung gemäß diesem Aspekt der vorliegenden Erfindung ist vorzugsweise frei von Pigmenten. Weiterhin ist die Zusammensetzung gemäß diesem Aspekt der Erfindung vorzugsweise frei von Füllstoffen. Des Weiteren ist die Zusammensetzung gemäß diesem Aspekt der Erfindung vorzugsweise frei von Netz- und Dispergiermitteln.

Diese weitere erfindungsgemäße Zusammensetzung, insbesondere das Halbfabrikat bzw. Vorprodukt, ermöglicht eine einfache Abmischung von Pigmentpasten bei den Herstellern von Pigmentpasten, welche dann für die jeweiligen Systeme und Maschinen optimiert ist. Der weiteren erfindungsgemäßen Zusammensetzung müssen lediglich noch Pigment sowie Netzmittel und gegebenenfalls Füllstoffe hinzugegeben werden, um zu der zuvor beschriebenen wässrigen Zusammensetzung, insbesondere Pigmentpaste, zu gelangen.

Im Rahmen der vorliegenden Erfindung weist die weitere die anorganische aluminiumhaltige Verbindung in Mengen von 20 bis 80 Gew.-%, insbesondere 30 bis 70 Gew.-%, vorzugsweise 40 bis 65 Gew.-%, bezogen auf die Zusammensetzung, auf.

Gleichermaßen ist es im Rahmen der vorliegenden Erfindung vorgesehen, dass die weitere Zusammensetzung Wasser in Mengen von 10 bis 60 Gew.-%, vorzugsweise 15 bis 50 Gew.-%, bevorzugt 20 bis 35 Gew.-%, bezogen auf die Zusammensetzung, aufweist.

Es ist erfindungsgemäß vorgesehen, dass die Zusammensetzung das Feuchthaltemittel in Mengen von 1 bis 10 Gew.-%, vorzugsweise 1,5 bis 8 Gew.-%, bevorzugt 1 bis 5 Gew.-%, bezogen auf die Zusammensetzung, enthält.

Gleichermaßen kann es im Rahmen der vorliegenden Erfindung vorgesehen sein, dass die weitere Zusammensetzung ein pH-Stellmittel aufweist. Wenn die weitere Zusammensetzung ein pH-Stellmittel aufweist, so hat es sich bewährt, wenn die Zusammensetzung das pH-Stellmittel in Mengen von 0,01 bis 10 Gew.-%, insbesondere 0,1 bis 8 Gew.-%, vorzugsweise 0,5 bis 7 Gew.-%, bevorzugt 1 bis 6 Gew.-%, bezogen auf die Zusammensetzung, aufweist.

Darüber hinaus kann es vorgesehen sein, dass die Zusammensetzung ein Additiv aufweist.

Wenn die Zusammensetzung ein Additiv aufweist, so werden gute Ergebnisse erhalten, wenn die Zusammensetzung das Additiv in Mengen 0,05 bis 10 Gew.-%, insbesondere 0,1 bis 7 Gew.-%, vorzugsweise 0,1 bis 5 Gew.-%, bevorzugt 0,2 bis 3 Gew.-%, bezogen auf die Zusammensetzung, enthält.

Für weitere Einzelheiten zu dieser weiteren erfindungsgemäßen Zusammensetzung kann auf die obigen Ausführungen zu den anderen Erfindungsaspekten verwiesen werden, welche in Bezug auf die weitere erfindungsgemäße Zusammensetzung entsprechend gelten.

### Ausführungsbeispiele

Es wurden sowohl mikrobiologische als auch Farbmessungen an Pigmentpasten durchgeführt, die Calciumaluminatsulfat enthalten und diese Ergebnisse mit identischen Pigmentpasten verglichen, die Biozide enthalten.

### 1.1 Herstellung der Pigmentpasten

Es werden insgesamt drei verschiedene Versuchsreihen von Pigmentpasten mit jeweils unterschiedlichen Pigmenten durchgeführt. Versuchsreihe 1 enthält ein organisches Blaupigment, Versuchsreihe 2 Schwarzpigmente auf Eisenoxidbasis und Versuchsreihe 2 ein Schwarzpigment auf Rußbasis.

Es werden in jeder Versuchsreihe jeweils eine Standardpigmentpaste, welche Biozide enthält, als Vergleichsbeispiel hergestellt sowie erfindungsgemäße Beispiele, die Calciumaluminatsulfat in unterschiedlichen Mengen und mit unterschiedlichen Partikelgrößen und Partikelgrößenverteilungen enthalten. Die Vergleichspasten und die erfindungsgemäßen Pasten unterscheiden sich jeweils nur in dem Austausch von Biozid gegen Calciumaluminatsulfat. Die verwendeten Chemikalien sind in der nachfolgenden Tabelle 1 angegeben und die Zusammensetzung der Pigmentpasten in den Tabellen 2 bis 4.

**Tabelle 1: Verwendete Chemikalien**

| Handelsname/Bezeichnung | Chemische Beschreibung | Funktion |
|---|---|---|
| Calciumaluminatsulfat-Dispersion 1 (CAD 1) | Calciumaluminatsulfat-Dispersion, 60 bis 64 Gew.-% Feststoff, D10 = 0,2 µm, D50 = 0,9 µm, D90 = 3,0 µm | Funktionsextender |
| Calciumaluminatsulfat-Dispersion 2 (CAD 2) | Calciumaluminatsulfat-Dispersion, 61 bis 63 Gew.-% Feststoff, D10 = 0,8 µm; D50 = 2-2,5 µm, D90 = 6,8 µm | Funktionsextender |
| Calciumaluminatsulfat- | Calciumaluminatsulfat, | |
| Pulver | Pulver | Funktionsextender |
| (CAP) | D50 = 50 - 70 µm | |
| NaOH (10%ig) | Natronlauge | pH-Stellmittel |
| KOH (10%ig) | Kalilauge | pH-Stellmittel |
| TEA (85%ig) | Triethanolamin | pH-Stellmittel |
| LiOH (10%ig) | Lithiumhydroxid | pH-Stellmittel |
| DMEA | Dimethylethanolamin | pH-Stellmittel |
| Loxanol P 5814 | Polyethylenglykol | Feuchthaltemittel |
| Glycerin | Glycerin | Feuchthaltemittel |
| PEG 300 | Polyethylenglykol | Feuchthaltemittel |
| Loxanol P 5813 | Polyethylenglykol | Feuchthaltemittel |
| Loxanol P 5824 | Polyethylenglykol | Feuchthaltemittel |
| CliQSMART 129 | Urethan | Feuchthaltemittel |
| Edaplan 490 | Modifiziertes Polymer mit pigmentaffinen Gruppen | Netzmittel |
| Tego Dispers 760 W | Polymer mit pigmentaffinen Gruppen | Netzmittel |
| Edaplan 910 | Modifizierter Polyglykolester | Netzmittel |
| Disperbyk 199 | Copolymer mit pigmentaffinen Gruppen | Netzmittel |
| Cliqsperse | Blockcolpoymer | Netzmittel |
| Edaplan 395 | Copolymer mit pigmentaffinen Gruppen | |
| Solsperse W100 | Polymerlösung | Netzmittel |
| Metolat 394 | Olefinisches Copolymer | Netzmittel |
| Tego Dispers 747 W | Modifiziertes Polymer mit pigmentaffinen Gruppen | Netzmittel |
| Metolat 392 | Olefinisches Copolymer | Netzmittel |
| Byk-022 | Polyglykol-/Polysiloxanentschäumer | Entschäumer |
| Agitan 731 | Siloxan | Entschäumer |
| Drewplus L 1700 | Öl | Entschäumer |
| Silfoam SC 369 | Organomodifiziertes Siliconöl | Entschäumer |
| BYL-016 | Poylmerentschäumer | Entschäumer |
| AeroSil R 972 | Pyrogene Kieselsäure | Rheologieadditiv |
| Bentone EW | Smektit | Rheologieadditiv |
| Laponite RD | Kieselsäure, Lithium-Magnesium-Natrium-Salz | Rheologieadditiv |
| Rheobyk 425 | Harnstoffmodifiziertes Polyurethan | Rheologieadditiv |
| Cliqflow 681 | Nicht-ionischer Assoziativ-Verdicker | Rheologieadditiv |
| Tafigel PUR 82 | Polyurethan | Rheologieadditiv |
| Silikolloid P87 puriss | Kieselsäure-Kaolinit-Gemisch | Rheologieadditiv |
| Microtalc IT extra | Magnesiumsilikathydrat | Rheologieadditiv |
| Bayferrox 318 M | Eisenoxidschwarz | Pigment |
| Bayferrox 318 MB | Eisenoxidschwarz | Pigment |
| Comos-Blue PRPL-A | Phthalocyaninblau | Pigment |
| Monarch 120 | Rußschwarz | Pigment |
| Blanc-fixe micro | Bariumsulfat | Füllstoff |
| Polygloss 90 | Kaolin | Füllstoff |
| Luzenac 20M0 | Magnesiumhydrosilikat | Füllstoff |
| Steopac | Magnesiumhydrosilikat | Füllstoff |
| China Clay Supreme | Kaolin | Füllstoff |
| Syloid ED 3 | amorphes Siliciumdioxid | Füllstoff |
| Acematt OK 500 | Siliciumdioxid | Füllstoff |
| Minex 4 | Nephelinsyenit | Füllstoff |
| Silibeads Typ S (5211-7) | Microglaskugeln 40 - 70 µm | Füllstoff |
| Acticide DB20 | 2,2-Dibromo-3-nitrilopropionamid (20 %) | Biozid |
| Acticide MV | 5-Chlor-2-methyl-4- | Biozid |
| | isothiazolin-3-on und 2-Methyl-2H -isothiazol-3-on | |
| | Wasser | Dispersionsmedium |

**Tabelle 2: Versuchsreihe 1 mit organischem Blaupigment**

| | | 1 | 1.1 | 1.2 | 1.3 |
|---|---|---|---|---|---|
| Wasser | [Gewichtsteile] | 29,46 | 23,00 | 16,00 | 14,00 |
| pH-Stellmittel | [Gewichtsteile] | - | 1,04 | 1,20 | 3,00 |
| Feuchthaltemittel | [Gewichtsteile] | 5,00 | 5,00 | 5,00 | 5,00 |
| Netzmittel | [Gewichtsteile] | 28,00 | 28,00 | 28,00 | 28,00 |
| CAD 1 | [Gewichtsteile] | - | 5,00 | 15,00 | - |
| CAD2 | [Gewichtsteile] | - | - | - | 15,00 |
| Entschäumer | [Gewichtsteile] | 0,20 | 0,20 | 0,20 | 0,20 |
| Rheologieadditiv | [Gewichtsteile] | 0,80 | 0,80 | 0,80 | 0,80 |
| Comos-Blue PRPL-A | [Gewichtsteile] | 36,00 | 36,00 | 36,00 | 36,00 |
| Biozid | [Gewichtsteile] | 0,54 | - | - | - |
| pH-Wert | | 7,65 | 10,85 | 11,4 | 12,57 |

**Tabelle 3: Versuchsreihe 2 mit Schwarzpigmenten auf Eisenoxidbasis**

| Nr. | | 2 | 2.1 | 2.2 | 2.3 |
|---|---|---|---|---|---|
| Wasser | [Gewichtsteile] | 26,26 | 15,60 | 9,60 | 9,60 |
| pH-Stellmittel | [Gewichtsteile] | - | 11,00 | 11,00 | 11,00 |
| Feuchthaltemittel | [Gewichtsteile] | 5,00 | 5,00 | 5,00 | 5,00 |
| Netzmittel | [Gewichtsteile] | 7,00 | 7,00 | 7,00 | 7,00 |
| CAD 1 | [Gewichtsteile] | - | 5,00 | 15,00 | - |
| CAD 2 | [Gewichtsteile] | - | - | - | 15,00 |
| Entschäumer | [Gewichtsteile] | 0,35 | 0,35 | 0,35 | 0,35 |
| Rheologieadditiv | [Gewichtsteile] | 2,25 | 2,25 | 2,25 | 2,25 |
| Bayferrox 318 M ox. Schwarz | [Gewichtsteile] | 6,50 | 6,50 | 6,50 | 6,50 |
| Bayferrox 318 MB ox. Schwarz | [Gewichtsteile] | 36,30 | 36,30 | 36,30 | 36,30 |
| Füllstoff | [Gewichtsteile] | 15,80 | 11,00 | 9,00 | 9,00 |
| Biozid | [Gewichtsteile] | 0,54 | - | - | - |
| pH-Wert | | 7,16 | 12,20 | 12,06 | 12,03 |

**Tabelle 4: Versuchsreihe 3 mit Schwarzpigment auf Rußbasis**

| | | 3 | 3.1 | 3.2 | 3.3 | 3.4 |
|---|---|---|---|---|---|---|
| Wasser | [Gewichtsteile] | 20,56 | 17,10 | 12,80 | 17,75 | 6,30 |
| pH-Stellmittel | [Gewichtsteile] | - | 2,5 | 1,30 | 1,35 | 1,70 |
| Feuchthaltemittel | [Gewichtsteile] | 5,00 | 5,00 | 5,00 | 5,00 | 5,00 |
| Netzmittel | [Gewichtsteile] | 29,50 | 29,50 | 29,50 | 29,50 | 29,50 |
| CAD 1 | [Gewichtsteile] | - | 5,00 | 15,00 | - | - |
| CAD 2 | [Gewichtsteile] | - | - | - | 15,00 | - |
| CAP | [Gewichtsteile] | - | - | - | - | 5,00 |
| Entschäumer | [Gewichtsteile] | 0,20 | 0,20 | 0,20 | 0,20 | 0,20 |
| Rheologieadditiv | [Gewichtsteile] | 1,20 | 1,20 | 1,20 | 1,20 | 1,20 |
| Monarch 120 | [Gewichtsteile] | 32,00 | 32,00 | 32,00 | 32,00 | 32,00 |
| Füllstoff | [Gewichtsteile] | 11,00 | 8,00 | 3,00 | 3,00 | 8,00 |
| Biozid | [Gewichtsteile] | 0,54 | - | - | - | - |
| pH-Wert | | 7,43 | 12,00 | 10,91 | 10,78 | 10,70 |

### 1.2 Sterilitätstest

Um die Keimresistenz der erfindungsgemäßen Zusammensetzungen zu testen, werden die erfindungsgemäßen Zusammensetzungen 1.1 bis 1.3, 2.1 bis 2.3 und 3.1 bis 3.4 mit den korrespondierenden biozidhaltigen Zusammensetzungen 1, 2 und 3 einem Sterilitätstest in Anlehnung an DIN EN 17516 unterzogen.

Die Ergebnisse sind in der nachfolgenden Tabelle 5 aufgeführt und zeigen, dass die erfindungsgemäßen Zusammensetzungen vergleichbare Sterilitäten wie die biozidhaltigen Zusammensetzungen aufweisen, obwohl sie frei von Konservierungsmitteln und Bioziden sind.

**Tabelle 5: Ergebnisse der durchgeführten Sterilitätstests**

| **Probe** | **Sterilität CASO/PS/SAB** | **MIT¹ in ppm** | **CIT² in ppm** | **BIT³ in ppm** | **Bronopol in ppm** | **ZnP⁴ in ppm** |
|---|---|---|---|---|---|---|
| 1 | 0/0/0 | 0 | 57 | 0 | 0 | 0 |
| 1.1 | 0/0/0 | 0 | 0 | 0 | 0 | 0 |
| 1.2 | 0/0/0 | 0 | 0 | 0 | 0 | 0 |
| 1.3 | 0/0/0 | 0 | 0 | 0 | 0 | 0 |
| 3 | 0/0/0 | 0 | 53 | 0 | 0 | 0 |
| 3.1 | 0/0/0 | 0 | 0 | 0 | 0 | 0 |
| 3.2 | 0/0/0 | 0 | 0 | 0 | 0 | 0 |
| 3.3 | 0/0/0 | 0 | 0 | 0 | 0 | 0 |
| 3.4 | 0/0/0 | 0 | 0 | 0 | 0 | 0 |
| 2 | 0/0/0 | 0 | 59 | 0 | 0 | 0 |
| 2.1 | 0/0/0 | 0 | 0 | 0 | 0 | 0 |
| 2.2 | 0/0/0 | 0 | 0 | 0 | 0 | 0 |
| 2.3 | 0/0/0 | 0 | 0 | 0 | 0 | 0 |

| | | | | | | |
|---|---|---|---|---|---|---|
| ¹: Methylisothiazolinon ²: Chlormethylisothiazolinon ³: Benzisothiazolinon ⁴: Zinkpyrithion | | | | | | |

### 1.3 Coloristischer Vergleich

Die unter 1.1 hergestellten Pigmentpasten werden jeweils in Mengen von 2 bis 5 g zur Herstellung einer aufgehellten Farbe und in einer Menge von 10 g zur Herstellung einer Volltonfarbe in 100 g einer Dispersionsfarbe auf Acrylatbasis eingearbeitet und auf eine Prüfplatte aufgebracht, wobei jeweils ein Vergleichsbeispiel und eine erfindungsgemäße Paste parallel auf eine Prüfplatte aufgebracht werden. Nach dem Trocknen werden die Farbaufträge verglichen.

### 1.3.1 Verusuchsreihe 1

### 1.3.1.1 Vergleich der Pigmentpasten 1 (Vergleich) und 1.1 (erfindungsgemäß)

### a) Aufhellung

Abmischung von 2 g Paste in 100 g Dispersionsfarbe. Parallelaufzug mit 200µm Rakel und anschließender Lufttrocknung.

Die Farbstärke sinkt durch den Einsatz des Calciumaluminatsulfats um ca. 2 %. Der Farbort bleibt ungefähr gleich. Ein visueller Unterschied ist nicht zu sehen.

### b) Vollton

Abmischung von 10 g Paste in 100 g Dispersionsfarbe. Parallelaufzug mit 200µm Rakel und anschließender Lufttrocknung.

Die Farbstärke steigt durch den Einsatz des Calciumaluminatsulfats um ca. 1,4% und auch der Farbort verändert sich. Dieser ist deutlich röter, gelber und schmutziger. Ein visueller Unterschied ist sichtbar.

### 1.3.1.2 Vergleich der Pigmentpasten 1 (Vergleich) und 1.2 (erfindungsgemäß)

### a) Aufhellung

Abmischung von 2 g Paste in 100 g Dispersionsfarbe. Parallelaufzug mit 200µm Rakel und anschließender Lufttrocknung.

Die Farbstärke sinkt durch den Einsatz des Calciumaluminatsulfats um ca. 12 %. Der Farbort verändert sich. Dieser ist deutlich heller, gelber und schmutziger. Ein visueller Unterschied ist ebenfalls sichtbar.

### b) Vollton

Abmischung von 10 g Paste in 100 g Dispersionsfarbe. Parallelaufzug mit 200µm Rakel und anschließender Lufttrocknung.

Die Farbstärke ist durch den Einsatz des Calciumaluminatsulfats nahezu unverändert, allerdings verändert sich der Farbort. Dieser ist deutlich gelber und schmutziger. Ein visueller Unterschied ist sichtbar.

### 1.3.1.3 Vergleich der Pigmentpasten 1 (Vergleich) und 1.3 (erfindungsgemäß)

### a) Aufhellung

Abmischung von 5 g Paste in 100 g Dispersionsfarbe. Parallelaufzug mit 200µm Rakel und anschließender Lufttrocknung.

Die Farbstärke sinkt durch den Einsatz des Calciumaluminatsulfats um ca. 12 %. Der Farbort verändert sich. Dieser ist deutlich gelber und schmutziger. Ein visueller Unterschied ist sichtbar.

### b) Vollton

Abmischung von 10 g Paste in 100 g Dispersionsfarbe. Parallelaufzug mit 200µm Rakel und anschließender Lufttrocknung.

Die Farbstärke ist durch den Einsatz des Calciumaluminatsulfats nahezu unverändert. Der Farbort wird allerdings gelber und schmutziger. Ein visueller Unterschied ist nur schwach sichtbar.

### 1.3.2.1 Vergleich der Pigmentpasten 2 (Vergleich) und 2.1 (erfindungsgemäß)

### a) Aufhellung

Abmischung von 5 g Paste in 100 g Dispersionsfarbe. Parallelaufzug mit 200µm Rakel und anschließender Lufttrocknung.

Die Farbstärke steigt durch den Einsatz des Calciumaluminatsulfats um ca. 5,6 %. Der Farbort verändert sich. Dieser ist deutlich heller, gelber und schmutziger. Ein visueller Unterschied ist ebenfalls sichtbar.

### b) Vollton

Abmischung von 10 g Paste in 100 g Dispersionsfarbe. Parallelaufzug mit 200µm Rakel und anschließender Lufttrocknung.

Die Farbstärke ist durch den Einsatz des Calciumaluminatsulfats nahezu unverändert. Der Farbort bleibt gleich. Ein visueller Unterschied nur schwach sichtbar.

### 1.3.2.2 Vergleich der Pigmentpasten 2 (Vergleich) und 2.2 (erfindungsgemäß)

### a) Aufhellung

Abmischung von 5 g Paste in 100 g Dispersionsfarbe. Parallelaufzug mit 200µm Rakel und anschließender Lufttrocknung.

Weder die Farbstärke noch der Farbort werden durch den Einsatz des Calciumaluminatsulfats verändert. Ein visueller Unterschied ist nicht zu erkennen.

### b) Vollton

Abmischung von 10 g Paste in 100 g Dispersionsfarbe. Parallelaufzug mit 200µm Rakel und anschließender Lufttrocknung.

Weder die Farbstärke noch der Farbort werden durch den Einsatz des Calciumaluminatsulfats verändert. Ein visueller Unterschied ist deutlich zu erkennen.

### 1.3.2.2 Vergleich der Pigmentpasten 2 (Vergleich) und 2.3 (erfindungsgemäß)

### a) Aufhellung

Abmischung von 5 g Paste in 100 g Dispersionsfarbe. Parallelaufzug mit 200µm Rakel und anschließender Lufttrocknung.

Durch den Einsatz des Calciumaluminatsulfats wird die Farbstärke um um ca. 4% gesteigert. Farbort wird leicht gelber und schmutziger. Ein visueller Unterschied ist nur schwach erkennbar.

### b) Vollton

Abmischung von 10 g Paste in 100 g Dispersionsfarbe. Parallelaufzug mit 200µm Rakel und anschließender Lufttrocknung.

Durch den Einsatz des Calciumaluminatsulfats wird die Farbstärke um um ca. 1% gesenkt. Der Farbort wird nur minimal verändert. Ein visueller Unterschied ist deutlich zu erkennen.

### 1.3.3.1 Vergleich der Pigmentpasten 3 (Vergleich) und 3.1 (erfindungsgemäß)

### a) Aufhellung

Abmischung von 2 g Paste in 100 g Dispersionsfarbe. Parallelaufzug mit 200µm Rakel und anschließender Lufttrocknung.

Durch den Einsatz des Calciumaluminatsulfats wird die Farbstärke um um ca. um ca. 4% reduziert. Der Farbort wird nur minimal verändert. Ein visueller Unterschied ist nur schwach zu erkennen.

### b) Vollton

Abmischung von 10 g Paste in 100 g Dispersionsfarbe. Parallelaufzug mit 200µm Rakel und anschließender Lufttrocknung.

Weder die Farbstärke noch der Farbort werden durch den Einsatz des Calciumaluminatsulfats verändert. Ein visueller Unterschied ist deutlich zu erkennen.

### 1.3.3.2 Vergleich der Pigmentpasten 3 (Vergleich) und 3.2 (erfindungsgemäß)

### a) Aufhellung

Abmischung von 2 g Paste in 100 g Dispersionsfarbe. Parallelaufzug mit 200µm Rakel und anschließender Lufttrocknung.

Durch den Einsatz des Calciumaluminatsulfats wird die Farbstärke um um ca. um ca. 4,5 % reduziert. Der Farbort wird nur minimal verändert. Ein visueller Unterschied ist nur schwach zu erkennen.

### b) Vollton

Abmischung von 10 g Paste in 100 g Dispersionsfarbe. Parallelaufzug mit 200µm Rakel und anschließender Lufttrocknung.

Weder die Farbstärke noch der Farbort werden durch den Einsatz des Calciumaluminatsulfats verändert. Ein visueller Unterschied ist schwach zu erkennen.

### 1.3.3.3 Vergleich der Pigmentpasten 3 (Vergleich) und 3.3 (erfindungsgemäß)

### a) Aufhellung

Abmischung von 2 g Paste in 100 g Dispersionsfarbe. Parallelaufzug mit 200µm Rakel und anschließender Lufttrocknung.

Durch den Einsatz des Calciumaluminatsulfats wird die Farbstärke um um ca. um ca. 2,4 % reduziert. Der Farbort wird nicht verändert. Ein visueller Unterschied ist zu erkennen.

### b) Vollton

Abmischung von 10 g Paste in 100 g Dispersionsfarbe. Parallelaufzug mit 200µm Rakel und anschließender Lufttrocknung.

Weder die Farbstärke noch der Farbort werden durch den Einsatz des Calciumaluminatsulfats verändert. Ein visueller Unterschied ist schwach zu erkennen.

### 1.3.3.4 Vergleich der Pigmentpasten 3 (Vergleich) und 3.4 (erfindungsgemäß)

### a) Aufhellung

Abmischung von 2 g Paste in 100 g Dispersionsfarbe. Parallelaufzug mit 200µm Rakel und anschließender Lufttrocknung.

Durch den Einsatz des Calciumaluminatsulfats wird die Farbstärke um um ca. um ca. 2 % reduziert. Der Farbort wird nicht verändert. Ein visueller Unterschied ist zu erkennen.

### b) Vollton

Abmischung von 10 g Paste in 100 g Dispersionsfarbe. Parallelaufzug mit 200µm Rakel und anschließender Lufttrocknung.

Weder die Farbstärke noch der Farbort werden durch den Einsatz des Calciumaluminatsulfats verändert. Ein visueller Unterschied ist schwach zu erkennen.

### 1.4 Fazit

Es zeigt sich, dass mit Calciumaluminatsulfat selbst in höheren Mengen Pigmentpasten erhalten werden können, die in der Coloritik mit herkömmlichen biozidhaltigen Pigmentpasten vergleichbar sind. Insbesondere bei Verwendung von feinteiligem Calciumaluminatsulfat können brillante Farben erhalten werden.

## Patentansprüche

1. Wässrige Zusammensetzung, insbesondere Pigmentpaste für Abtönsysteme,
**dadurch gekennzeichnet,**
**dass** die Zusammensetzung, jeweils bezogen auf die Zusammensetzung, enthält:
(a) eine anorganische aluminiumhaltige Verbindung mit einer Löslichkeit von weniger als 5 g/l bei 20 °C in Wasser in Mengen von 2 bis 20 Gew.-%, wobei die anorganische aluminiumhaltige Verbindung ausgewählt ist aus der Gruppe von Magnesiumaluminiumphosphaten, Magnesiumaluminiumsilikaten, Calciumaluminiumphosphaten, Calciumaluminiumsilikaten, Calciumaluminat-Hydraten, Calciumaluminatsulfat und deren Mischungen,
(b) ein Netz- oder Dispergiermittel in Mengen von 1 bis 50 Gew.-% wobei das Netz- oder Dispergiermittel aus einem sauer und/oder basisch funktionalisierten Polymer, insbesondere mit polaren funktionellen Gruppen, aus der Gruppe von funktionalisierten Polyaminen, funktionalisierten Polyurethanen, funktionalisierten Poly(meth)acrylaten, funktionalisierten Vinylcopolymeren, funktionalisierten Polyether/Polyester-Copolymeren, funktionalisierten Polyethern, funktionalisierten Polyestern, funktionalisierten Fettsäurecopolymeren, funktionalisierten Blockcopolymeren und/oder funktionalisierten Polyalkoxylaten sowie Mischungen oder Kombinationen von mindestens zwei dieser Verbindungen ausgewählt ist,
(c) ein Feuchthaltemittel in Mengen von 0,1 bis 30 Gew.-%, wobei das Feuchthaltemittel aus der Gruppe von Polyethylenglykolen, Tripropylengylkol, Polypropylenglykol, Polyakylenglykol, Glycerin, Glycerinethoxylat, Polyethern, Polyurethanen und deren Mischungen ausgewählt ist, und
(d) ein Pigment in Mengen von 5 bis 85 Gew.-%.

2. Wässrige Zusammensetzung nach Anspruch 1, **dadurch gekennzeichnet, dass** die anorganische aluminiumhaltige Verbindung eine Löslichkeit im Bereich von 0,001 bis 5 g/l, insbesondere 0,001 bis 4 g/l, vorzugsweise 0,01 bis 3 g/l, bevorzugt 0,1 bis 2 g/l, besonders bevorzugt 0,2 bis 1,5 g/l, ganz besonders bevorzugt 0,4 bis 1 g/l, bei 20 °C in Wasser aufweist.

3. Wässrige Zusammensetzung nach einem der vorangehenden Ansprüche, **dadurch gekennzeichnet, dass** die anorganische aluminiumhaltige Verbindung ausgewählt ist aus Calciumaluminaten.

4. Wässrige Zusammensetzung nach einem der vorangehenden Ansprüche, **dadurch gekennzeichnet, dass** die anorganische aluminiumhaltige Verbindung ausgewählt ist aus der Gruppe von Calciumaluminat-Hydraten, Calciumaluminatsulfat und deren Mischungen, vorzugsweise Calciumaluminatsulfat.

5. Wässrige Zusammensetzung nach einem der vorangehenden Ansprüche, **dadurch gekennzeichnet, dass** die Zusammensetzung einen pH-Wert von 9,5 oder höher aufweist, insbesondere einen pH-Wert im Bereich von 9,5 bis 14, vorzugsweise 9,5 bis 13, bevorzugt 9,5 bis 12, besonders bevorzugt 9,5 bis 11,5, ganz besonders bevorzugt 10,2 bis 11,4, aufweist.

6. Wässrige Zusammensetzung nach einem der vorangehenden Ansprüche, **dadurch gekennzeichnet, dass** die Zusammensetzung das Netz- oder Dispergiermittel in Mengen von 3 bis 45 Gew.-%, vorzugsweise 5 bis 40 Gew.-%, bevorzugt 8 bis 35 Gew.-%, bezogen auf die Zusammensetzung, enthält.

7. Wässrige nach einem der vorangehenden Ansprüche, **dadurch gekennzeichnet, dass** die Zusammensetzung das Feuchthaltemittel in Mengen von 1 bis 25 Gew.-%, vorzugsweise 2 bis 20 Gew.-%, bevorzugt 5 bis 15 Gew.-%, bezogen auf die Zusammensetzung, enthält.

8. Wässrige Zusammensetzung nach einem der vorangehenden Ansprüche, **dadurch gekennzeichnet, dass** das Pigment ausgewählt ist aus der Gruppe von organischen Pigmenten, anorganischen Pigmenten und deren Mischungen.

9. Wässrige Zusammensetzung nach einem der vorangehenden Ansprüche, **dadurch gekennzeichnet, dass** die Zusammensetzung das Pigment in Mengen von 6 bis 80 Gew.-%, vorzugsweise 8 bis 75 Gew.-%, bevorzugt 10 bis 70 Gew.-%, bezogen auf die Zusammensetzung, enthält.

10. Wässrige Zusammensetzung nach einem der vorangehenden Ansprüche, **dadurch gekennzeichnet, dass** die Zusammensetzung insbesondere zumindest im Wesentlichen frei ist von Konservierungsmitteln und/oder dass die Zusammensetzung insbesondere zumindest im Wesentlichen frei ist von Bioziden.

11. Verwendung einer wässrigen Zusammensetzung nach einem der Ansprüche 1 bis 10 als Pigmentpaste zur Abtönung von Bindemittelsystemen, insbesondere von Anstrichmitteln, vorzugsweise von Dispersionsfarben.

12. Kit-of-Parts enthaltend eine Zusammensetzung nach einem der Ansprüchen 1 bis 10 und eine Abtönbasis, insbesondere ein Anstrichmittel, vorzugsweise eine Dispersionsfarbe.

13. Kit-of-Parts nach Anspruch 12, **dadurch gekennzeichnet, dass** die Abtönbasis einen Komplexbildner und/oder einen pH-Stabilisator enthält, insbesondere wobei die Abtönbasis den Komplexbildner und/oder den pH-Stabilisator in Mengen von 0,1 bis 10 Gew.-%, insbesondere 0,2 bis 8 Gew.-%, vorzugsweise 0,5 bis 5 Gew.-%, bezogen auf die Dispersionsfarbe, enthält.

14. Zusammensetzung, insbesondere Halbfabrikat und/oder Vorprodukt, zur Herstellung einer Zusammensetzung, insbesondere Pigmentpaste, nach einem der Ansprüche 1 bis 10, **dadurch gekennzeichnet, dass** die Zusammensetzung, jeweils bezogen auf die Zusammensetzung, enthält:
(i) eine anorganische aluminiumhaltige Verbindung mit einer Löslichkeit von weniger als 5 g/l bei 20 °C in Wasser in Mengen von 20 bis 80 Gew.-%,
(ii) Wasser in Mengen von 10 bis 60 Gew.-%, und
(iii) Feuchthaltemittel in Mengen von 1 bis 10 Gew.-%, wobei das Feuchthaltemittel aus der Gruppe von Polyethylenglykolen, Tripropylengylkol, Polypropylenglykol, Polyakylenglykol, Glycerin, Glycerinethoxylat, Polyethern, Polyurethanen und deren Mischungen ausgewählt ist.

15. Zusammensetzung nach Anspruch 14, **dadurch gekennzeichnet, dass** die Zusammensetzung die anorganische aluminiumhaltige Verbindung in Mengen von 30 bis 70 Gew.-%, vorzugsweise 40 bis 65 Gew.-%, bezogen auf die Zusammensetzung, aufweist.

16. Zusammensetzung nach Anspruch 14 oder 15, **dadurch gekennzeichnet, dass** die Zusammensetzung Wasser in Mengen von vorzugsweise 15 bis 50 Gew.-%, bevorzugt 20 bis 35 Gew.-%, bezogen auf die Zusammensetzung, aufweist.

17. Zusammensetzung nach einem der Ansprüche 45 bis 47, **dadurch gekennzeichnet, dass** die Zusammensetzung das Feuchthaltemittel in Mengen von 1,5 bis 8 Gew.-%, bevorzugt 1 bis 5 Gew.-%, bezogen auf die Zusammensetzung, enthält.

## Claims

1. Aqueous composition, in particular a pigment paste for tinting systems,
**characterized in**
**that** the composition contains, in each case based on the composition:
(a) an inorganic aluminum-containing compound having a solubility of less than 5 g/L in water at 20 °C in amounts of 2 to 20 wt.-%, wherein the inorganic aluminum-containing compound is selected from the group consisting of magnesium aluminum phosphates, magnesium aluminum silicates, calcium aluminum phosphates, calcium aluminum silicates, calcium aluminate hydrates, calcium aluminate sulfate, and mixtures thereof,
(b) a wetting or dispersing agent in amounts of 1 to 50 wt.%, wherein the wetting or dispersing agent is selected from an acid- and/or base-functionalized polymer, in particular one with polar functional groups, from the group of functionalized polyamines, functionalized polyurethanes, functionalized poly(meth)acrylates, functionalized vinyl copolymers, functionalized polyether/polyester copolymers, functionalized polyethers, functionalized polyesters, functionalized fatty acid copolymers, functionalized block copolymers, and/or functionalized polyalkoxylates, as well as mixtures or combinations of at least two of these compounds,
(c) a humectant in amounts of 0.1 to 30 wt.-%, wherein the humectant is selected from the group consisting of polyethylene glycols, tripropylene glycol, polypropylene glycol, polyalkylene glycol, glycerin, glycerin ethoxylate, polyethers, polyurethanes, and mixtures thereof, and
(d) a pigment in amounts of 5 to 85 wt%.

2. Aqueous composition according to claim 1, **characterized in that** the inorganic aluminum-containing compound has a solubility in water in the range of 0.001 to 5 g/l, in particular 0.001 to 4 g/l, preferably 0.01 to 3 g/l, more preferably 0.1 to 2 g/l, and most preferably 0.2 to 1.5 g/l, and most particularly preferred 0.4 to 1 g/L, in water at 20 °C.

3. Aqueous composition according to any of the preceding claims, **characterized in that** the inorganic aluminum-containing compound is selected from calcium aluminates.

4. Aqueous composition according to any of the preceding claims, **characterized in that** the inorganic aluminum-containing compound is selected from the group consisting of calcium aluminate hydrates, calcium aluminate sulfate, and mixtures thereof, preferably calcium aluminate sulfate.

5. Aqueous composition according to any one of the preceding claims, **characterized in that** the composition has a pH of 9.5 or higher, in particular a pH in the range of 9.5 to 14, preferably 9.5 to 13, more preferably 9.5 to 12, and most preferably 9.5 to 11.5, and most particularly preferably 10.2 to 11.4.

6. Aqueous composition according to any of the preceding claims, **characterized in that** the composition contains the wetting or dispersing agent in amounts of 3 to 45 wt.-%, preferably 5 to 40 wt.-%, more preferably 8 to 35 wt.-%, based on the composition.

7. Aqueous composition according to any of the preceding claims, **characterized in that** the composition contains the humectant in amounts of 1 to 25 wt.-%, preferably 2 to 20 wt.-%, more preferably 5 to 15 wt.-%, based on the composition.

8. Aqueous composition according to any of the preceding claims, **characterized in that** the pigment is selected from the group consisting of organic pigments, inorganic pigments, and mixtures thereof.

9. Aqueous composition according to any of the preceding claims, **characterized in that** the composition contains the pigment in amounts of 6 to 80 wt.-%, preferably 8 to 75 wt.-%, more preferably 10 to 70 wt.-%, based on the composition.

10. Aqueous composition according to any of the preceding claims, **characterized in that** the composition is, in particular, at least substantially free of preservatives and/or that the composition is, in particular, at least substantially free of biocides.

11. Use of an aqueous composition according to any one of claims 1 through 10 as a pigment paste for tinting binder systems, in particular paints, preferably emulsion paints.

12. Kit-of-parts containing a composition according to any one of claims 1 through 10 and a tinting base, in particular a coating, preferably an emulsion paint.

13. Kit-of-parts according to claim 12, **characterized in that** the tinting base contains a complexing agent and/or a pH stabilizer, in particular wherein the tinting base contains the complexing agent and/or the pH stabilizer in amounts of 0.1 to 10 wt.%, in particular 0.2 to 8 wt.-%, preferably 0.5 to 5 wt.-%, based on the emulsion paint.

14. Composition, in particular a semi-finished product and/or precursor, for the production of a composition, in particular a pigment paste, according to any one of claims 1 through 10, **characterized in that** the composition contains, in each case based on the composition:
(i) an inorganic aluminum-containing compound having a solubility of less than 5 g/L in water at 20 °C in amounts of 20 to 80 wt.-%,
(ii) water in amounts of 10 to 60 wt.%, and
(iii) a humectant in amounts of 1 to 10 wt.-%, wherein the humectant is selected from the group consisting of polyethylene glycols, tripropylene glycol, polypropylene glycol, polyalkylene glycol, glycerin, glycerin ethoxylate, polyethers, polyurethanes, and mixtures thereof.

15. Composition according to claim 14, **characterized in that** the composition comprises the inorganic aluminum-containing compound in amounts of 30 to 70 wt.-%, preferably 40 to 65 wt.-%, based on the composition.

16. Composition according to claim 14 or 15, **characterized in that** the composition comprises water in amounts of preferably 15 to 50 wt.-%, more preferably 20 to 35 wt.-%, based on the composition.

17. Composition according to any one of claims 45 through 47, **characterized in that** the composition contains the humectant in amounts of 1.5 to 8 wt.%, preferably 1 to 5 wt.%, based on the composition.

## Revendications

1. Composition aqueuse, en particulier pâte pigmentaire pour systèmes de mise en teinte, **caractérisée en ce**
en ce que la composition contient, dans chaque cas par rapport à la composition :
(a) un composé inorganique contenant de l'aluminium, présentant une solubilité inférieure à 5 g/l dans l'eau à 20 °C, en quantités comprises entre 2 et 20 % en poids, ledit composé inorganique contenant de l'aluminium étant choisi parmi le groupe constitué des phosphates de magnésium et d'aluminium, des silicates de magnésium et d'aluminium, des phosphates de calcium et d'aluminium, des silicates de calcium et d'aluminium, des hydrates d'aluminate de calcium, du sulfate d'aluminate de calcium et de leurs mélanges,
(b) un agent mouillant ou dispersant en quantités comprises entre 1 et 50 % en poids%, l'agent mouillant ou dispersant étant choisi parmi un polymère fonctionnalisé de manière acide et/ou basique, en particulier comportant des groupes fonctionnels polaires, parmi le groupe comprenant les polyamines fonctionnalisées, les polyuréthanes fonctionnalisés, les poly(méth)acrylates fonctionnalisés, les copolymères vinyliques fonctionnalisés, les copolymères polyéther/polyester, de polyéthers fonctionnalisés, de polyesters fonctionnalisés, de copolymères d'acides gras fonctionnalisés, de copolymères à blocs fonctionnalisés et/ou de polyalkoxylates fonctionnalisés, ainsi que de mélanges ou de combinaisons d'au moins deux de ces composés,
(c) un agent humidifiant en quantités comprises entre 0,1 et 30 % en poids, l'agent humidifiant étant choisi parmi le groupe constitué des polyéthylèneglycols, du tripropylèneglycol, du polypropylèneglycol, des polyalkylèneglycols, de la glycérine, des éthoxylates de glycérine, des polyéthers, des polyuréthanes et de leurs mélanges, et
(d) un pigment en quantités comprises entre 5 et 85 % en poids.

2. Composition aqueuse selon la revendication 1, **caractérisée en ce que** le composé inorganique contenant de l'aluminium présente une solubilité dans la plage de 0,001 à 5 g/l, en particulier de 0,001 à 4 g/l, de préférence de 0,01 à 3 g/l, de préférence encore de 0,1 à 2 g/l, et de manière particulièrement préférée de 0,2 à 1,5 g/l, et tout particulièrement de 0,4 à 1 g/l, à 20 °C dans l'eau.

3. Composition aqueuse selon l'une des revendications précédentes, **caractérisée en ce que** le composé inorganique contenant de l'aluminium est choisi parmi les aluminates de calcium.

4. Composition aqueuse selon l'une des revendications précédentes, **caractérisée en ce que** le composé inorganique contenant de l'aluminium est choisi parmi le groupe constitué des hydrates d'aluminate de calcium, du sulfate d'aluminate de calcium et de leurs mélanges, de préférence le sulfate d'aluminate de calcium.

5. Composition aqueuse selon l'une des revendications précédentes, **caractérisée en ce que** la composition présente un pH de 9,5 ou plus, en particulier un pH compris entre 9,5 et 14, de préférence entre 9,5 et 13, de manière préférée entre 9,5 et 12, de manière particulièrement préférée entre 9,5 et 11,5, et de manière tout à fait particulièrement préférée, compris entre 10,2 et 11,4.

6. Composition aqueuse selon l'une des revendications précédentes, **caractérisée en ce que** la composition contient l'agent mouillant ou dispersant en quantités comprises entre 3 et 45 % en poids, de préférence entre 5 et 40 % en poids, de préférence encore entre 8 et 35 % en poids, par rapport à la composition.

7. Composition aqueuse selon l'une des revendications précédentes, **caractérisée en ce que** la composition contient l'agent humidifiant en quantités comprises entre 1 et 25 % en poids, de préférence entre 2 et 20 % en poids, de préférence encore entre 5 et 15 % en poids, par rapport à la composition.

8. Composition aqueuse selon l'une des revendications précédentes, **caractérisée en ce que** le pigment est choisi parmi le groupe constitué des pigments organiques, des pigments inorganiques et de leurs mélanges.

9. Composition aqueuse selon l'une des revendications précédentes, **caractérisée en ce que** la composition contient le pigment en quantités comprises entre 6 et 80 % en poids, de préférence entre 8 et 75 % en poids, et de manière particulièrement préférée entre 10 et 70 % en poids, par rapport à la composition.

10. Composition aqueuse selon l'une des revendications précédentes, **caractérisée en ce que** la composition est notamment au moins essentiellement exempte d'agents conservateurs et/ou **en ce que** la composition est notamment au moins essentiellement exempte de biocides.

11. Utilisation d'une composition aqueuse selon l'une des revendications 1 à 10 en tant que pâte pigmentaire pour la mise en teinte de systèmes de liants, en particulier de peintures, de préférence de peintures en dispersion.

12. Kit de composants contenant une composition selon l'une des revendications 1 à 10 et une base de teinte, en particulier un produit de peinture, de préférence une peinture en dispersion.

13. Kit-of-Parts selon la revendication 12, **caractérisé en ce que** la base de nuançage contient un agent complexant et/ou un stabilisateur de pH, en particulier la base de nuançage contenant l'agent complexant et/ou le stabilisateur de pH en quantités comprises entre 0,1 et 10 % en poids, en particulier de 0,2 à 8 % en poids, de préférence de 0,5 à 5 % en poids, par rapport à la peinture en dispersion.

14. Composition, en particulier produit semi-fini et/ou précurseur, destinée à la fabrication d'une composition, en particulier d'une pâte pigmentaire, selon l'une des revendications 1 à 10, **caractérisée en ce que** la composition contient, dans chaque cas par rapport à la composition :
(i) un composé inorganique contenant de l'aluminium, présentant une solubilité inférieure à 5 g/l à 20 °C dans l'eau, en quantités comprises entre 20 et 80 % en poids,
(ii) de l'eau en quantités comprises entre 10 et 60 % en poids, et
(iii) un agent humidifiant en quantités comprises entre 1 et 10 % en poids, l'agent humidifiant étant choisi parmi le groupe comprenant les polyéthylèneglycols, le tripropylèneglycol, le polypropylèneglycol, les polyalkylèneglycols, la glycérine, les éthoxylates de glycérine, les polyéthers, les polyuréthanes et leurs mélanges.

15. Composition selon la revendication 14, **caractérisée en ce que** la composition contient le composé inorganique à base d'aluminium en quantités comprises entre 30 et 70 % en poids, de préférence entre 40 et 65 % en poids, par rapport à la composition.

16. Composition selon la revendication 14 ou 15, **caractérisée en ce que** la composition contient de l'eau en quantités comprises de préférence entre 15 et 50 % en poids, de préférence entre 20 et 35 % en poids, par rapport à la composition.

17. Composition selon l'une des revendications 45 à 47, **caractérisée en ce que** la composition contient l'agent humidifiant en quantités comprises entre 1,5 et 8 % en poids, de préférence entre 1 et 5 % en poids, par rapport à la composition.
